# EUROPEAN PATENT APPLICATION

(11) **EP 4 834 969 A1**
(43) Date of publication of application: **04.11.2026**
(21) Application number: 25172889.5
(22) Date of filing: 28.04.2025
(51) Int. Cl.: C08G 63/06, C08K 5/09

(54) **A CROSS-LINKED ELASTOMERIC POLYESTER MATERIAL AND A METHOD FOR PRODUCING THE SAME**

(71) Applicant: Reselo AB, 170 76 Solna (SE)
(72) Inventor: Chen, Chao, 113 67 Stockholm (SE); Baumgarten, Thomas, 170 75 Solna (SE); Säfsten, Filip, 117 62 Stockholm (SE); Björnerbäck, Fredrik, 184 51 Österskär (SE); Zakko, Kresty, 170 76 Solna (SE)
(74) Representative: Berggren Oy

(57) **Abstract**

The invention relates to a cross-linked elastomeric polyester material of suberin monomers and pentacyclic triterpenoid(s). The cross-linked elastomeric polyester material contains carbon chain moieties between adjacent ester bonds that have, per moiety, one or more of carbon-carbon double bond(s), epoxy group(s), and/or hydroxyl group(s). A method for producing said cross-linked elastomeric polyester material is also disclosed. A rubber composition and a rubber product comprising said cross-linked elastomeric polyester material are also provided.

## Description

### Technical field

The present disclosure relates to polymer material derivable from renewable sources. More specifically, although not exclusively, the present disclosure relates to a cross-linked elastomeric polyester material derivable from bark that contains suberin and pentacyclic triterpenoids, and compositions and uses thereof, as well as a method for producing the same.

### Background

There is a long felt need to move towards more sustainable materials. There is ongoing research to replace fossil-based materials with renewable counterparts, and to circular economy solutions aiming to find value added use for industrial waste and side streams. Further, as the demand for sustainable materials increase and the concept of sustainability matures, there is a need to widen the pool of renewable or bio-based raw materials both in view of protecting biodiversity and coping with the increasing demand. Natural rubber is a bio-based material which has long been in use in the rubber industry. Presently, however, natural rubber production results in deforestation of tropical rain forest.

On the other hand, over the years fossil-based, synthetic rubbers have also become abundant rubber types with an annual production of over 15 million tons in 2023. There is a need to provide new renewable raw materials that contain enhanced functionality and meet both sustainability and performance requirements of the rubber industry. In particular, there is a need for sustainable and renewable rubber materials that can be obtained by industrially viable and environmentally friendly production processes.

### Summary

It is an object of the present disclosure to provide an improved renewable elastomeric material, and/or to provide an improved method for producing the same. It is an object of the present disclosure to further provide a rubber composition comprising said elastomeric polyester material and a rubber product thereof.

According to a first example aspect, herein is provided a cross-linked elastomeric polyester material of suberin monomers and pentacyclic triterpenoid(s), the cross-linked elastomeric polyester material containing carbon chain moieties between adjacent ester bonds having, per moiety, one or more of carbon-carbon double bond(s), epoxy group(s), and/or hydroxyl group(s).

According to a second example aspect, herein is provided a method for producing a cross-linked elastomeric polyester material according to the first example aspect, the method comprising:
providing mechanically disintegrated bark, the bark containing suberin and pentacyclic triterpenoid(s),
extracting the bark with a mixture of polar alcohol and water, and recovering a solid fraction comprising suberin and pentacyclic triterpenoid(s),
subjecting the solid fraction to alkaline hydrolysis to obtain a depolymerised fraction comprising suberin monomers and pentacyclic triterpenoid(s), the suberin monomers comprising fatty acids having, per fatty acid, at least two, preferably at least three, functionalities that are, independently from each other, carbon-carbon double bond(s), epoxy group(s), carboxyl group(s), and/or hydroxyl group(s),
recovering and drying the depolymerised fraction comprising suberin monomers and pentacyclic triterpenoid(s) to obtain a dried fraction,
solubilizing the dried fraction in aqueous solvent to obtain an aqueous solution comprising suberin monomers and pentacyclic triterpenoid(s),
co-precipitating suberin monomers and pentacyclic triterpenoid(s) from the aqueous solution through acidification and recovering a precipitate comprising suberin monomers and pentacyclic triterpenoid(s),
subjecting the precipitate, optionally after drying, to polymerisation to obtain the cross-linked elastomeric polyester material of suberin monomers and pentacyclic triterpenoid(s).

In certain embodiments, the mixture of polar alcohol and water comprises water in an amount within a range from 5 wt-% to 35 wt-%, preferably from 7 wt-% to 35 wt-%, more preferably from 10 wt-% to 35 wt-%, of the total weight of the mixture. Advantageously, the combined amount of polar alcohol and water in said mixture is 100 wt-%.

In certain embodiments, the cross-linked elastomeric polyester material comprises pentacyclic triterpenoid(s) from 2 wt-% to 15 wt-%, based on the total dry weight of the cross-linked elastomeric polyester material.

In certain embodiments, the pentacyclic triterpenoid(s) contain betulin.

In certain embodiments, of the suberin monomers at least 75 wt-% are fatty acids containing at least two functionalities that are, independently from each other, carbon-carbon double bond(s), epoxy group(s), carboxyl group(s), and/or hydroxyl group(s).

In certain embodiments, the cross-linked elastomeric polyester material comprises suberin monomers and pentacyclic triterpenoid(s) in a total amount of at least 90 wt-%, preferably at least 95 wt-%, based on the total dry weight of the cross-linked elastomeric polyester material.

According to a third example aspect, herein is provided a rubber composition comprising a cross-linked elastomeric polyester material according to the first example aspect, at least one other rubber, optionally one or more filler(s), and optionally one or more curing agent(s) and/or one or more additive(s), such as plasticiser(s), colorant(s), and/or processing agent(s).

According to a fourth example aspect, herein is provided a rubber product comprising a cured cross-linked elastomeric polyester material according to the first example aspect or a cured rubber composition according the third example aspect.

According to a further example aspect, herein is provided use of a cross-linked elastomeric polyester material according to the first example aspect, or a rubber composition according to the third example aspect, or a rubber product according to the fourth example aspect in rubber component(s) and/or rubber article(s), such as in footwear, clothing, accessories, gasket(s), hose(s), insulation product(s), electronics, sports equipment, flooring, and/or automotive component(s).

Various parts of the description as disclosed herein, including the summary provided above and the detailed description provided hereafter, are meant to be read together and may be combined.

### Brief description of the drawings

- Fig. 1: illustrates schematically a method for producing a cross-linked elastomeric polyester material of suberin monomers and pentacyclic triterpenoid(s);
- Fig. 2: illustrates schematically a part of a cross-linked elastomeric polyester material of suberin monomers and pentacyclic triterpenoid(s), and suberin monomers;
- Fig. 3: shows a curing rheology curve of sulphur vulcanisation of a cross-linked elastomeric polyester material of suberin monomers and pentacyclic triterpenoid(s);
- Fig. 4: shows a curing rheology curve of peroxide curing of cross-linked elastomeric polyester material of suberin monomers and pentacyclic triterpenoid(s);
- Fig. 5: shows a Py-GC/MS gas chromatogram of betulin when pyrolysed at 340 °C;
- Fig. 5a: shows mass spectra at retention time RT3 of the chromatogram of Fig. 5;
- Fig. 5b: shows mass spectra at retention time RT2 of the chromatogram of Fig. 5;
- Fig. 5c: shows mass spectra at retention time RT1 of the chromatogram of Fig. 5;
- Fig. 6: shows a Py-GC/MS gas chromatogram of cross-linked elastomeric polyester material of suberin monomers and pentacyclic triterpenoid(s) when pyrolysed at 340°C, the sample preparation including acetone extraction,
- Fig. 6a: shows mass spectra at retention time RT3 of the chromatogram of Fig. 6;
- Fig. 6b: shows mass spectra at retention time RT2 of the chromatogram of Fig. 6;
- Fig. 6c: shows mass spectra at retention time RT1 of the chromatogram of Fig. 6;
- Fig. 7: shows Py-GC/MS gas chromatograms of a cured rubber product comprising cross-linked elastomeric polyester material of suberin monomers and pentacyclic triterpenoid(s), RBP1, and of a cured rubber product without cross-linked elastomeric polyester material of suberin monomers and pentacyclic triterpenoid(s), RBP2, respectively, when pyrolysed at 340°C, the sample preparation including acetone extraction;
- Fig. 7a: shows mass spectra at retention time RT1 of the chromatogram of Fig. 7 measured from the cured rubber product without cross-linked elastomeric polyester material of suberin monomers and pentacyclic triterpenoid(s), RBP2;
- Fig. 7b: shows mass spectra at retention time RT1 of the chromatogram of Fig. 7 measured from the cured rubber product comprising cross-linked elastomeric polyester material of suberin monomers and pentacyclic triterpenoid(s), RBP1;
- Fig. 8: shows Py-GC/MS gas chromatograms of a cured rubber product comprising cross-linked elastomeric polyester material of suberin monomers and pentacyclic triterpenoid(s), RBP1, when pyrolysed at 340°C, the sample preparation including acetone extraction;
- Fig. 8a: shows mass spectra at retention time RT2 of the chromatogram of Fig. 8;
- Fig. 8b: shows mass spectra at retention time RT1 of the chromatogram of Fig. 8;
- Fig. 9: shows Py-GC/MS gas chromatograms of a cured rubber product comprising cross-linked elastomeric polyester material of suberin monomers and pentacyclic triterpenoid(s), RBP1, and of a cured rubber product comprising betulin, RPB3, respectively, when pyrolysed at 340°C, the sample preparation including acetone extraction.

The schematic figures are for illustrative purposes, and not meant to limit the invention, which is disclosed in the appended set of claims.

### Detailed description

As used herein, curing refers to cross-linking reactions between polymer chains, especially cross-linking reactions forming covalent linkages or bonds between polymer chains. In the context of this disclosure, said covalent linkages are typically carbon-carbon, carbon-sulphur, and/or sulphur-sulphur. In particular, curing refers in the context of the present disclosure to heat and pressure induced curing carried out with the aid of curing agent(s), sometimes also referred to as curing chemical(s) or curative(s). Such curing may be referred to as vulcanisation. Advantageously, the curing or vulcanisation, as used herein, is sulphur vulcanisation, peroxide vulcanization, i.e. peroxide curing, metal ion vulcanisation, i.e. metal ion curing, or vulcanisation with resin, i.e. curing with resin, more advantageously sulphur vulcanisation, or peroxide vulcanisation, i.e. peroxide curing, even more advantageously sulphur vulcanisation. In the context of the present disclosure, a cured material or a cured composition or a cured product refers to a material, composition, or product, respectively, that has been subjected to curing, i.e. vulcanisation, as detailed hereabove thereby forming covalent linkages or bonds between polymer chains.

In the context of the present disclosure, cross-linking refers to covalent cross-linking that takes place during production of an elastomer, typically in a step in which monomers are polymerised to form the elastomeric polymer. In the case of cross-linked elastomeric polyester material of suberin monomers and pentacyclic triterpenoid(s), for example, cross-linking refers to covalent cross-links formed when subjecting suberin monomers and pentacyclic triterpenoid(s) to polymerisation, typically covalent cross-links formed between monomer moieties during production of the cross-linked elastomeric polyester material of suberin monomers and pentacyclic triterpenoid(s). In the context of this disclosure, such cross-links are typically covalent ester bonds typically linking together two suberin monomer moieties.

The expression parts per hundred rubber, abbreviated as phr, is commonly used in rubber manufacturing to denote the mass proportion of a component in a rubber composition containing elastomer(s), i.e. rubber(s), wherein the total mass of rubber(s) is given a nominal value of 100. In the context of the present disclosure, cross-linked elastomeric polyester material of suberin monomers and pentacyclic triterpenoid(s) is typically included in the total mass of rubber(s) given the nominal value of 100. In other words, in this disclosure, cross-linked elastomeric polyester material of suberin monomers and pentacyclic triterpenoid(s) is typically included in the hundred rubber.

As used herein, dry weight refers to a weight from which the weight of water has been excluded, if water is present. In other words, water, if present, is not taken into account in a dry weight, or weight percentages calculated based on dry weight.

The share of renewable or biogenic carbon in a carbon containing material or product, e.g. polymer, can be determined by carbon isotope analysis, for example according to ASTM D6866-24a. Thus, presence of a renewable constituent or renewable constituents can be analytically determined and quantified for example from the cross-linked elastomeric polyester material of suberin monomers and pentacyclic triterpenoid(s) or a rubber composition or a rubber product comprising the same.

In the context of this disclosure, bark refers to outermost layers of stems and roots of woody plants, in particular to outermost layers of stems of trees. As used herein, bark refers to tissues outside the vascular cambium and may include inner and/or outer layers, advantageously at least an outer layer. Such outer layer may be periderm or part(s) thereof.

In the present disclosure, birch refers to trees of the genus *Betula.* Advantageously, birch refers to *Betula pendula,* sometimes referred to as silver birch, *Betula papyrifera,* sometimes referred to as white birch, and/or *Betula alleghaniensis,* sometimes referred to as yellow birch, more advantageously *Betula pendula.* As used herein, birch bark refers to bark of birch tree(s), i.e. a tree or trees of the genus *Betula,* advantageously *Betula pendula.* In the context of the present disclosure, birch bark refers at least to outer bark, i.e. periderm or parts thereof, of birch trees, advantageously *Betula pendula.*

Birch trees are important hardwood species commonly used in the pulp and paper industry in Northern Europe, North America, and the Baltic countries. Before use in pulp production, birch bark is removed from the birch trees or logs. A single paper mill may generate over 60 000 tons of birch bark each year. The removed birch bark has conventionally been considered a low value material stream, and has been used for energy generation in the pulp and paper industry or sent to heating plants. There is hence a supply of birch bark considered an industrial side stream. The present disclosure allows value added use of said side stream. Obtaining birch bark from a side stream of the pulp and paper industry is advantageous from a sustainability perspective as an already existing industry side stream may be repurposed and given value added use.

As used herein, the term bark includes industrial bark. Industrial bark typically contains wood in a minor but non-negligible amount, for example wood in an amount within a range from 17 wt-% to 32 wt-%, based on the total weight of the industrial bark. Industrial birch bark may contain wood and/or bark from tree(s) other than birches in a minor but non-negligible amount, for example in an amount within a range from 17 wt-% to 32 wt-%, based on the total weight of the industrial birch bark. Industrial birch bark is obtainable for example as an industrial side stream from the pulp and paper industry. It has been found that the present cross-linked elastomeric polyester material can be generated from industrial bark containing suberin and pentacyclic triterpenoid(s) even on industrial scale using the herein described method.

Typically, bark contains various biopolymers as well as small molecules. The genus and species of the tree may affect the compounds present in the bark and the amounts thereof. For example, birch bark contains high amounts of various valuable compounds, such as suberin and pentacyclic triterpenoids, particularly betulin. Birch bark may contain about 20 wt-% to 45 wt-% of suberin and about 20 wt-% to 35 wt-% of pentacyclic triterpenoids, mainly betulin, of the total dry weight of the bark. Birch bark is hence a preferred raw material to generate the cross-linked elastomeric polyester material of the present disclosure.

Suberin is a natural polyester. In the bark, suberin forms network structures of esterified fatty acids, aromatic compounds, and glycerol. The fatty acids of suberin may have in addition to a fatty acid carboxyl group one or more further functionalities.

Suberin may be separated or isolated from bark together with an amount of pentacyclic triterpenoids, and the suberin can be depolymerised in the presence of the pentacyclic triterpenoid(s). It has now been found that suberin monomers and pentacyclic triterpenoids can be obtained from bark in same process steps using partial extraction of pentacyclic triterpenoid(s) from the bark and co-precipitation of suberin monomers and pentacyclic triterpenoid(s), as will be described herein. The thus obtained suberin monomers and pentacyclic triterpenoid(s) may be subjected to polymerisation to form a cross-linked elastomeric polyester material of suberin monomers and pentacyclic triterpenoid(s), as will be described herein.

### Cross-linked elastomeric polyester material of suberin monomers and pentacyclic triterpenoid(s)

The present disclosure provides a cross-linked elastomeric polyester material of suberin monomers and pentacyclic triterpenoid(s). Said polyester material contains between adjacent ester bonds carbon chain moieties that have, per moiety, one or more of carbon-carbon double bond(s), epoxy group(s), and/or hydroxyl group(s). These carbon chain moieties and the functionalities contained therein are generally suberin monomer moieties. A portion of the suberin monomer moieties maintain one or more of their functionalities in the polymerisation, including cross-linking. A carbon chain moiety refers to a catenated structure, wherein the chain length, shape, and functional groups may vary.

The carbon chain moiety generally has a carbon chain extending between adjacent ester bonds, i.e. it is a moiety, wherein two adjacent ester bonds are spaced apart and linked by a carbon chain. In the context of the present disclosure, ester bond includes the ester carbon bound to two oxygen atoms. Some carbon chain moieties of the present polyester material contain, per moiety, at least one functionality that is one or more of carbon-carbon double bond(s), epoxy group(s), and/or hydroxyl group(s). The carbon chain moiety may contain, per moiety, one of carbon-carbon double bond, epoxy group, and/or hydroxyl group. The rest of the carbon chain moiety may be or consist substantially of saturated carbon and hydrogen atoms. The present cross-linked polyester material may contain carbon chain moieties having a carbon-carbon double bond, carbon chain moieties having a hydroxyl group, and carbon chain moieties having an epoxy group. Typically, the present cross-linked polyester material contains at least carbon chain moieties having, per moiety, one or more carbon-carbon double bond(s) and carbon chain moieties having, per moiety, one or more hydroxyl group(s). Epoxy groups present in the suberin moieties in the bark may open during separation (isolation) of suberin monomers from the bark, and/or during the polymerisation to obtain the cross-linked elastomeric polyester material. Generally, opened epoxy groups form hydroxyl groups.

Although the present cross-linked elastomeric polyester material contains a plurality of carbon chain moieties having at least one functionality as described above, not every carbon chain extending between adjacent ester bonds necessarily contains a functionality. Some carbon chains extending between adjacent ester bonds in the cross-linked elastomeric polyester material may be unsubstituted, saturated alkyl chains. Typically, the carbon chains extending between adjacent ester bonds, including the carbon chain moieties having at least one functionality as described above, are acyclic (notwithstanding any epoxy group(s) with an oxygen atom forming a ring). Advantageously, the majority, i.e. at least 50 wt-%, of the carbon chains extending between adjacent ester bonds are carbon chain moieties having, per moiety, one or more of carbon-carbon double bond(s), epoxy group(s), and/or hydroxyl group(s).

The present cross-linked elastomeric polyester material may, in addition to the above described functionalities of the carbon chain moieties, contain carboxyl and/or hydroxyl end groups. Some carbon chains of the cross-linked elastomeric polyester material may end into a pentacyclic triterpenoid moiety, such pentacyclic triterpenoid moiety thus serving as an end group. The chains extending between an end group and its adjacent ester bond may contain one or more of carbon-carbon double bond(s), epoxy group(s), and/or hydroxyl group(s).

The present cross-linked elastomeric polyester material has rubber-like properties and may be used for replacing conventional rubber elastomers in full or in part in various applications. The cross-linked elastomeric polyester material can be obtained from tree bark that contains suberin and pentacyclic triterpenoid(s), especially birch bark, for example as will be described herein. Hence, the present cross-linked elastomeric polyester material generally is a renewable, even fully renewable, cross-linked elastomeric polyester material. That is, the present cross-linked elastomeric polyester material typically contains up to or about 100 % renewable or biogenic carbon as determined by carbon isotope analysis, for example ASTM D6866-24a.

The present material is substantially a cross-linked polyester. The cross-linking within polymer molecules of the present material is mainly formed through ester bonds between suberin monomers. The present polyester material typically forms cross-linked, network-like structures of suberin monomers and pentacyclic triterpenoid(s). The structure of the present cross-linked elastomeric polyester material approaches advantageously an infinite network, which means that a majority of the monomeric units available for polymerisation have covalently bonded to form larger molecules, including formation of bonds between such larger molecules. A finite molecular weight is typically not determinable for an infinite network. The extent of an infinite network structure may be limited merely by the physical availability of monomers during polymerisation. The pentacyclic triterpenoid(s) may be bound to suberin monomers or the polymer molecule through ester bonds, and/or the pentacyclic triterpenoid(s) may interact non-covalently with a cross-linked suberin monomer structure. Without being bound to any theory, it is believed that the network-like structure of the present material is formed by functionalities in suberin monomers in addition to carboxyl and/or hydroxyl end groups, which functionalities have formed ester bonds with carboxyl and/or hydroxyl end groups of other suberin monomers. The pentacyclic triterpenoid(s) included in the present cross-linked polyester material affect the structure and organization of the cross-linked network. The inclusion of the pentacyclic triterpenoid(s) affects material properties of the present cross-linked elastomeric polyester material.

Due to the functionality or functionalities remaining in the carbon chain moieties after polymerisation, the present cross-linked elastomeric polyester material contains several functionalities or functional groups, which, in addition to its end groups, may interact and/or react with other molecules and/or materials. This is advantageous for example in rubber applications. The functionalities of the carbon chain moieties, i.e. carbon-carbon double bond(s), epoxide group(s), and/or hydroxyl group(s), may react in curing reactions, such as sulphur vulcanisation or peroxide curing, commonly used in production of rubber components or products, for example to alter mechanical properties and/or to adjust physical and/or chemical properties. The functionalities remaining in the carbon chain moieties after polymerisation, in particular the oxygen containing hydroxyl groups, and epoxy groups if present, may contribute to polarity of the present cross-linked polyester material. Said oxygen containing functional groups may interact with other at least slightly polar compounds or materials. This may for example improve compatibility, blendability, and/or miscibility of multicomponent mixtures containing the present cross-linked elastomeric polyester material. Renewable materials or constituents for rubber components or products, for example vegetable oils and biobased resins, may be more polar than their fossil-based counterparts. The cross-linked elastomeric polyester material may contribute to compatibility of these renewable materials in non-polar rubber matrixes. Hence, the present cross-linked elastomeric material may increase the share of renewable constituents that can be incorporate into a rubber component or product. Presence of the cross-linked elastomeric polyester material may facilitate mixing of polar rubber polymers and non-polar rubber polymers.

Advantageously, at least 90 wt-%, more advantageously at least 95 wt-%, of the total dry weight of the cross-linked elastomeric polyester material of suberin monomers and pentacyclic triterpenoids are suberin monomers and/or suberin monomer moieties and pentacyclic triterpenoid(s). It is understood that in the cross-linked elastomeric polyester material the suberin monomers have mostly or even substantially undergone polymerisation reactions and that pentacyclic triterpenoid(s) may to some extent be covalently bonded to polymerised, i.e. esterified, suberin monomers and/or interact non-covalently with the esterified suberin monomers. In addition to suberin monomer moieties and pentacyclic triterpenoid(s), the cross-linked elastomeric polyester material may contain other constituents. Based on the dry weight of the cross-linked elastomeric polyester material, the cross-linked elastomeric polyester material of suberin monomers and pentacyclic triterpenoid(s) advantageously contains up to 10 wt-%, preferably less than 10 wt-% or 5 wt-% or less, of other constituents, such as residual salt(s), ion(s), and/or small organic molecules typically having a carbon number of C6 or below.

As discussed in the foregoing, suberin contains fatty acid structures which may be separated from bark and depolymerised to form suberin monomers. The fatty acid structures present and recoverable from the bark depends e.g. on the genus and/or species of the tree(s) from which the bark originates but are also affected by the method used for obtaining the suberin monomers.

In the present disclosure, depolymerised suberin is referred to as suberin monomers. Generally, the suberin monomers are fatty acids, mainly aliphatic, linear fatty acids (notwithstanding any epoxy group(s) that may be present). As is appreciated by the person skilled in the art, a fatty acid contains at least one carboxyl group.

Before polymerisation, the suberin monomers are typically fatty acids. Advantageously, of the suberin monomers at least 75 wt-% are fatty acids containing at least two functionalities that are, independently from each other, carbon-carbon double bond(s), epoxy group(s), carboxyl group(s), and/or hydroxyl group(s). Preferably, of the suberin monomers at least 25 wt-% are fatty acids containing at least three functionalities that are, independently from each other, carbon-carbon double bond(s), epoxy group(s), carboxyl group(s), and/or hydroxyl group(s). Preferably, these fatty acids are aliphatic, linear fatty acids (notwithstanding any epoxy group(s) that may be present). The suberin monomers typically have carbon numbers within a range from C14 to C24. Carbon atoms are generally not lost during polymerisation or esterification of suberin monomers.

Suberin monomers containing, in addition to the inherent fatty acid carboxyl group, at least a further carboxyl group and/or one or more hydroxyl group(s) and/or one or more epoxy group(s) may form at least two ester bonds, which allows the formation of the present cross-linked polyester material. Especially ester bonds formed via a hydroxyl group or an epoxy group positioned elsewhere than in an end group of a suberin monomer result in cross-linking and formation of the network-like structure.

Carbon-carbon double bonds, hydroxyl groups, and/or epoxy groups remaining in the present material after polymerisation are advantageous in that they may participate in curing reactions, such as sulphur vulcanisation or peroxide curing. Advantageously, of the suberin monomers at least 3 wt-% and optionally at most 50 wt-% contain one or more carbon-carbon double bond, based on the total dry weight of the suberin monomers.

Suberin monomers obtainable from birch, especially *Betula pendula, Betula papyrifera,* and/or *Betula alleghaniensis,* may comprise one or more of 9,10,18-trihydroxy-18:0 acid, 22-hydroxy-22:0 acid, 18-hydroxy-(9)18:1 acid, 1,22-dioic-22:0 acid, 1,18-dioic-(9)18:1 acid, 20-hydroxy-20:0 acid, 9,16-dihydroxy-16:0 acid, 10,16-dihydroxy-16:0 acids, 20-hydroxy-20:1 acid, 9,18-dihydroxy-(9)18:1 acid, and/or 1,20-dioic-20:0 acid. When the present material is obtained from birch bark, these may be the major suberin monomers, present in a total amount of at least 50 wt-%, based on the total dry weight of the suberin monomers.

Accordingly, the suberin monomers advantageously comprise one or more of hydroxy-1,18-dioic-18:1 acid, 9,10,18-trihydroxy-18:0 acid, 22-hydroxy-22:0 acid, 18-hydroxy-(9)18:1 acid, 1,22-dioic-22:0 acid, 1,18-dioic-(9)18:1 acid, 20-hydroxy-20:0 acid, 9,16- dihydroxy-16:0 acid, 10,16-dihydroxy-16:0 acid, 20-hydroxy-20:1 acid, 9,18-dihydroxy-(9)18:1 acid, and/or 1,20-dioic-20:0 acid, preferably in a total amount of at least 50 wt-%, based on the total dry weight of the suberin monomers. These fatty acids are typically obtainable from birch bark suberin as the major fatty acids or suberin monomers. A typical epoxy containing fatty acid obtainable from birch bark suberin is 9, 10-epoxy-18-hydroxy octadecanoic acid.

Identity and quantification data of suberin monomers can be determined by GC/MS and GC-FID, respectively, prior to polymerisation. The GC/MS and GC-FID analyses are advantageously carried out as described in Heinimäki et al, J. Nat. Prod. 2017, 80, 916-924, on p. 922 under Physicochemical Material Characterization*.*

Similarly to the suberin monomers, the pentacyclic triterpenoid(s) recoverable from the bark depends e.g. on the genus and/or species of the tree(s) from which the bark originates. Also, the method used for obtaining the cross-linked polyester material will affect the pentacyclic triterpenoid(s), especially the amount of the pentacyclic triterpenoid(s), recovered from the bark and subjected to the polymerisation.

The present cross-linked elastomeric polyester material preferably comprises pentacyclic triterpenoid(s) at least 2 wt-%, more preferably from 2 wt-% to 15 wt-%, based on the total dry weight of the cross-linked elastomeric polyester material. The pentacyclic triterpenoid(s) may be covalently bonded to the polyester structure and/or otherwise included in the cross-linked elastomeric polyester material. The pentacyclic triterpenoid(s) and their amount affect material properties of the present cross-linked elastomeric polyester material. For example, a high wt-% share of pentacyclic triterpenoid(s) in the cross-linked elastomeric polyester material, such as above 15 wt-%, typically results in a stiffer and more brittle, less elastic material. A high amount of pentacyclic triterpenoids may interfere with the polymerisation when forming the present material. The identity and wt-% of pentacyclic triterpenoid(s) is determinable by means of GC/MS optionally complemented by ¹H NMR and/or ¹³C NMR. The GC/MS analyses is advantageously carried out as described by Ferreira et al, in Industrial Crops and Products 44 (2013), 520-527*.*

The presence of pentacyclic triterpenoid(s) contained in the cross-linked elastomeric polyester material is determinable by means of Pyrolysis-Gas Chromatography/Mass Spectrometry (Py-GC/MS). The presence of pentacyclic triterpenoid(s) can be detected by means of Py-GC/MS analysis when pyrolyzed at 340 °C from the present cross-linked elastomeric polyester material before or after curing, or from rubber products or components containing the present cross-linked elastomeric polyester material, before or after curing. It was found that when Py-GC/MS samples were subjected to acetone extraction prior to analysis, a distinction could be made between pentacyclic triterpenoid(s), in particular betulin, that had been mixed into a rubber product as such, and pentacyclic triterpenoid(s) contained in the present cross-linked elastomeric polyester material of suberin monomers and pentacyclic triterpenoid(s) when contained in a rubber product. In samples subjected to acetone extraction prior to Py-GC/MS analysis, pentacyclic triterpenoid(s), such as betulin, mixed into a rubber composition as such could not be detected by Py-GC/MS while pentacyclic triterpenoid(s) contained in the cross-linked elastomeric polyester material of suberin monomers and pentacyclic triterpenoid(s) were detectable by the same Py-GC/MS method. This finding shows that pentacyclic triterpenoid(s) form indeed part of the present cross-linked elastomeric polyester material of suberin monomers and pentacyclic triterpenoid(s), and suggests that pentacyclic triterpenoid(s) are covalently bonded to the polyester structure.

The pentacyclic triterpenoid(s) may comprise one or more of betulin, betulinic acid, lupeol, betulin aldehyde, and/or oleanolic acid. Especially, pentacyclic triterpenoid(s) refer herein to pentacyclic triterpenoids containing four interconnected six membered ring structures and one five membered ring structure. Such pentacyclic triterpenoids are in the context of the present disclosure referred to as lupane type triterpenoids, as they share the carbon ring structure of lupane. Preferably, the pentacyclic triterpenoid(s) comprise betulin, or betulin and betulinic acid. Betulin may make up 50 wt-% or more of the pentacyclic triterpenoid(s), based on the total dry weight of the pentacyclic triterpenoid(s). Such pentacyclic triterpenoid(s) can be obtained from birch bark, for example as will be described herein.

At least a portion of the pentacyclic triterpenoid(s) may contain one or more hydroxyl group(s), carbon-carbon double bond(s), and/or carboxyl group(s). Hydroxyl and/or carboxyl groups of the pentacyclic triterpenoid(s) may form ester bonds with the suberin monomers. Hydroxyl and/or carboxyl groups of the pentacyclic triterpenoid(s) may interact and/or react with other molecules and/or materials present in a composition, for example other slightly polar materials and thus. contribute to their blendability, compatibility, and/or miscibility with non-polar components or in non-polar matrixes.

Preferably, the mol:mol ratio of aliphatic hydroxyl groups to aliphatic carboxyl groups of the suberin monomers and pentacyclic triterpenoids combined is within a range from 0.8 to 2.5, as determined by P-NMR. This ratio gives the ratio of aliphatic hydroxyl groups to aliphatic carboxyl groups before polymerisation, and accounts for aliphatic hydroxyl groups and aliphatic carboxyl groups in the suberin monomers and in the pentacyclic triterpenoids. The P-NMR analysis is advantageously carried out as described by Meng, X., et al. in Nat Protoc 14, 2627-2647 (2019*).*

The present cross-linked polyester material is elastomeric, and it is typically renewable or bio-based. The present material is generally highly flexible, and has been found to regain its shape after deformation. The present cross-linked elastomeric polyester material typically has a tensile strength within a range from 0.5 MPa to 8 MPa. Elongation at break of the present cross-linked elastomeric polyester material is typically within a arrange from 25 % to 50 %.

The tensile properties may be determined according to standard ASTM D412-16(2021).

The cross-linked elastomeric polyester material of suberin monomers and pentacyclic triterpenoid(s) is typically an amorphous or semi-amorphous material as seen from differential scanning calorimetry, abbreviated DSC. The present cross-linked polyester material typically has a glass transition temperature (T_{g}) within a range from -30°C to +30°C, preferably from -20°C to +20°C, more preferably from -15°C to +15°C, as determined by differential scanning calorimetry, DSC, according to standard D7426-24.

The density of the present cross-linked elastomeric polyester material is typically within a range from 0.85 kg/dm³ to 1.70 kg/dm³, preferably from 1.10 kg/dm³ to 1.70 kg/dm³, as determined according to ISO 2781:2018.

The present cross-linked elastomeric polyester material typically has a hardness within a range from 35 ShA to 45 ShA, as determined according to ASTM D2240-15(2021) at 25°C. The presence of the cross-linked elastomeric polyester material in a rubber composition or product has been found to generally increase hardness, once cured, compared to a corresponding rubber composition or product without the cross-linked elastomeric polyester material.

The present cross-linked elastomeric polyester material may have a contact angle within a range from 75° to 90°. Water contact angle may be determined as static contact angle determined from an image of a side view of a water droplet on a substantially planar sample of the present cross-linked polyester material.

The present cross-linked elastomeric polyester material typically has a limited, or even no, solubility in water, ethanol, and/or other common organic solvents. Such limited solubility indicates cross-linking, as well as a high degree of polymerisation and purity.

The present cross-linked elastomeric polyester material of suberin monomers and pentacyclic triterpenoid(s) advantageously has a solubility in acetone at most 30 wt-%, more advantageously at most 20 wt-%, even more advantageously at most 15 wt-%, based on the total weight of the cross-linked elastomeric polyester material, as determined according to ASTM D297-21(2022) except that acetone extraction is carried out with boiling acetone for 1h. Limited solubility in acetone indicates degree of polymerisation of the cross-linked elastomeric polyester material, a lower solubility in acetone being indicative of a higher degree of polymerisation. During acetone extraction, unpolymerised monomers, oligomers, residual impurities, and/or a portion of the pentacyclic triterpenoid(s) are believed to be extracted from the cross-linked elastomeric polyester material. Hence, the acetone solubility is affected by purity, extent of polymerisation, and/or content of pentacyclic triterpenoid(s) of the present cross-linked elastomeric polyester material.

Generally, the present cross-linked polyester material has a dark, brown or brownish color. The color of the present cross-linked elastomeric polyester material may reduce the need for dyes and/or other colorants in a rubber product and/or component. The color of a rubber product or component may in certain embodiments be controlled by the amount of the present cross-linked polyester material in said rubber product. Typically, the higher the amount of the present cross-linked elastomeric polyester material, the darker the color.

The properties described in the foregoing at least indirectly reflect the chemistry and internal structure, such as cross-linking, of the present cross-linked elastomeric polyester material. They also reflect or show the rubber-like properties of the present material. The data above shows that the present cross-linked elastomeric polyester material has advantageous properties and indicates that it may be used for replacing conventional rubber types.

### Method for producing the cross-linked elastomeric polyester material of suberin monomers and pentacyclic triterpenoid(s)

The present cross-linked polyester material may be obtained from bark that contains suberin and pentacyclic triterpenoid(s), advantageously birch bark. As discussed in the foregoing, birch bark is rich in both suberin and pentacyclic triterpenoids, particularly betulin. Both the composition of the bark as well as the method for producing the cross-linked elastomeric polyester material can affect the resulting material. For example, the bark and/or the method can affect the types of suberin monomers and triterpenoid(s) isolated from the bark and their shares or amounts in the final product.

It has now been found that suberin monomers and pentacyclic triterpenoid(s) can be separated (isolated) or obtained from the bark in same method steps, and recovered together in a co-precipitation. The precipitate of such co-precipitation, containing both suberin monomers and pentacyclic triterpenoid(s), may be subjected to polymerisation as such or simply after drying, allowing to produce the present cross-linked elastomeric polyester material. The amount of pentacyclic triterpenoid(s) can be controlled by suitable solvent selection in an initial extraction step.

Herein is thus provided a method for producing the present cross-linked elastomeric polyester material, the method comprising:
providing mechanically disintegrated bark, the bark containing suberin and pentacyclic triterpenoid(s),
extracting the bark with a mixture of a polar alcohol and water and recovering a solid fraction comprising suberin and pentacyclic triterpenoid(s),
subjecting the solid fraction to alkaline hydrolysis to obtain a depolymerised fraction comprising suberin monomers and pentacyclic triterpenoid(s), the suberin monomers comprising fatty acids having, per fatty acid, at least two, preferably at least three, functionalities that are, independently from each other, carbon-carbon double bond(s), epoxy group(s), carboxyl group(s), and/or hydroxyl group(s),
recovering and drying the depolymerised fraction comprising suberin monomers and pentacyclic triterpenoid(s) to obtain a dried fraction,
solubilizing the dried fraction in an aqueous solvent to obtain an aqueous solution comprising suberin monomers and pentacyclic triterpenoid(s),
co-precipitating suberin monomers and pentacyclic triterpenoid(s) from the aqueous solution through acidification and recovering a precipitate comprising suberin monomers and pentacyclic triterpenoid(s),
subjecting the precipitate, optionally after drying, to polymerisation, optionally in the presence of a catalyst, to obtain the cross-linked elastomeric polyester material of suberin monomers and pentacyclic triterpenoid(s).

The above method steps are typically carried out consecutively in the above order. The present method may be carried out without other organic solvents than polar alcohol. Especially, the present method may be carried out without extraction with other organic solvents than polar alcohol. The absence of other organic solvents than polar alcohol allows to save recourses, improve safety and environmental sustainability, compared to processes employing organic solvent(s) other than polar alcohols. For example, the burden of waste water treatment may be reduced, and solvent recovery system(s) and solvent storage system(s) may be omitted. The present method thus provides an industrially viable and environmentally friendly production process. In the context of the present disclosure, especially present method, water refers advantageously to deionized water.

In the context of the present disclosure, mechanical disintegration refers to mechanically reducing the size of the bark to powder, particles, fragments, or pieces, i.e. mechanically breaking up the bark into smaller pieces or particles. The mechanically disintegrated bark may be shredded and/or powdered, preferably powdered. The mechanical disintegration may be carried out for example by milling, cutting, crushing, and/or shredding, preferably milling and/or shredding, more preferably milling. The mechanical disintegration of the bark is typically carried out before the extracting of the bark. Preferably, the mechanically disintegrated bark is mechanically disintegrated birch bark, more preferably birch bark shreds and/or powder, more preferably birch bark powder. Benefits of the present cross-linked polyester material include that it can be derived from renewable sources, from raw material that does not compete for resources with tropical rain forest. It also decreases dependency on fossil resources. In fact, the present method and material may even provide value added use to birch bark side streams of the pulp and paper industry.

The method comprises subjecting the mechanically disintegrated bark to extraction with a mixture of polar alcohol and water, also referred to herein as extraction solvent. Advantageously, the polar alcohol is ethanol. Inclusion of water in the extraction solvent increases its polarity compared to the polar alcohol. This increase in solvent polarity compared to the polar alcohol affects the composition of the extractives, and consequently the composition of the compounds remaining in the solid fraction, that is mechanically disintegrated bark that has been subjected to the extraction. Advantageously, the mixture, i.e. extraction solvent, comprises water in an amount within a range from 5 wt-% to 35 wt-%, preferably from 7 wt-% to 35 wt-%, more preferably from 10 wt-% to 35 wt-%, based on the total weight of the mixture. The remainder of the mixture typically consist substantially of the polar alcohol, preferably ethanol.

Accordingly, advantageously the combined amount of the polar alcohol and water in said mixture is 100 wt-%. The mixture of polar alcohol and water extracts triterpenoids and other extractives from the bark, including pentacyclic triterpenoids, such as betulin and betulinic acid. However, the extraction of pentacyclic triterpenoids from the bark is merely partial (partial extraction). That is, pentacyclic triterpenoids are extracted from the bark to a lesser degree compared to extracting with the polar alcohol, advantageously ethanol. Generally, pentacyclic triterpenoids are rather non-polar. Hence, including water in the extraction solvent decreases the extraction of the pentacyclic triterpenoids into the liquid phase, thus increasing their share in the solid fraction. This increased share of pentacyclic triterpenoids in the solid fraction allows recovering both suberin and an amount of pentacyclic triterpenoid(s) in the solid fraction. In addition to the suberin and pentacyclic triterpenoid(s), the solid fraction recovered from the extraction typically contains lignin and carbohydrates, typically as lignin-carbohydrate complexes.

The extraction may be carried out at reflux conditions. Advantageously, the bark and the mixture of polar alcohol and water may be stirred during the extraction. The duration of the extraction is advantageously at least 15 min, such as within a range from 15 min to 60 min. Typically, the mixture of polar alcohol and water has a temperature of at least 50°C, such as within a range from 50°C to 150°C. When temperatures at the higher end of said range are used, the extraction is typically carried out in a pressurized vessel.

The solid fraction may be recovered from the extraction by any suitable means. For example, the solid fraction may be separated from the liquid fraction by filtration, and/or decanting. Advantageously, the solid fraction is recovered by separating the solid fraction from the liquid fraction by filtration, such as vacuum filtration. The recovery of the solid fraction may be carried out in the same unit operation, reactor, and/or process equipment as the extraction, or it may be carried out in a unit operation, reactor, and/or process equipment separate from the one in which the extraction is carried out.

After the extraction, the recovered solid fraction comprising suberin and pentacyclic triterpenoid(s) is subjected to alkaline hydrolysis to obtain a depolymerised fraction comprising suberin monomers and pentacyclic triterpenoid(s). The alkaline hydrolysis depolymerises at least suberin thus forming suberin monomers. The depolymerised fraction is a liquid fraction, and may be referred to as hydrolysate.

The suberin monomers obtained in the alkaline hydrolysis step comprise fatty acids having, per fatty acid, at least two, preferably at least three, functionalities that are, independently from each other, carbon-carbon double bond(s), epoxy group(s), carboxyl group(s), and/or hydroxyl group(s). The suberin monomers formed in the alkaline hydrolysis step through depolymerisation are generally suberin monomers as described in the foregoing.

The alkaline hydrolysis is typically carried out in a mixture of polar alcohol, water, and strong base, also referred to herein as hydrolysis solvent. The polar alcohol may be a same alcohol or a different alcohol than the one employed in the extraction. Advantageously, the alkaline hydrolysis is carried out in a mixture of ethanol, water, and a hydroxide, preferably sodium hydroxide and/or potassium hydroxide. Preferably, the hydrolysis is carried out under stirring. Advantageously, the alkaline hydrolysis is carried out in a mixture, i.e. hydrolysis solvent, containing the polar alcohol, advantageously ethanol, in an amount within a range from 60 wt-% to 95 wt-%, such as 85 wt-%, water in an amount within a range from 5 wt-% to 40 wt-%, such as 12 wt-%, and the hydroxide, preferably sodium hydroxide, in an amount within a range from 0.5 wt-% to 8 wt-%, such as 3 wt-%, based on the total weight of said mixture. The combined amount of the polar alcohol, water, and the hydroxide in the mixture or hydrolysis solvent is advantageously 100 wt-%. Preferably, the alkaline hydrolysis is carried out at a temperature within a range from 60°C to 90°C, more preferably from 70°C to 80°C. Such temperatures have been found beneficial in that they contribute to a sufficient degree of hydrolysis and an industrially viable reaction time, while not requiring a pressurized vessel nor promoting side reactions to a substantial degree. The duration of the alkaline hydrolysis is typically within a range from 1 hours to 5 hours, such as 2 hours to 4 hours.

The depolymerised fraction, i.e. hydrolysate, is recovered and dried to obtain a dried fraction. Recovering the depolymerised fraction may comprise separating the depolymerised fraction (liquid fraction) from the solid fraction (spent bark), advantageously by filtering. The solid fraction may be washed, for example with a polar alcohol, such as ethanol, optionally mixed with water, to increase the recovery of the depolymerised fraction. The solid fraction from the hydrolysis contains spent bark comprising lignin and carbohydrates, typically as lignin carbohydrate complexes. The recovery of the depolymerised fraction may be carried out in the same unit operation, reactor, and/or process equipment as the hydrolysis, or it may be carried out in a unit operation reactor, and/or process equipment separate from the one in which the hydrolysis is carried out.

The drying of the recovered depolymerised fraction may be carried out by any suitable means. The drying may comprise heating the recovered depolymerised fraction optionally under reduced pressure (compared to atmospheric pressure). For example, the drying may be carried out at a temperature of 60°C and a pressure of 72 mbar(a) or less. The drying is typically continued until a solid dried fraction is obtained.

The dried fraction comprises suberin monomers and pentacyclic triterpenoid(s). The dried fraction is solubilized in an aqueous solvent, preferably water, more preferably deionized water, to obtain an aqueous solution comprising suberin monomers and pentacyclic triterpenoid(s). The solubilization may be carried out under stirring. Suberin monomers and pentacyclic triterpenoid(s) are co-precipitated from the aqueous solution through acidification of the aqueous solution. It has been found that by drying the recovered hydrolysate followed by dissolving it in an aqueous environment, generally without any purification steps or treatments in between, suberin monomers and pentacyclic triterpenoid(s) can be co-precipitated via acidification. Advantageously, the acidification comprises acidifying the aqueous solution to a pH within a range from 2 to 5, preferably from 3 to 4. The acidification protonates suberin monomers thus causing suberin monomers to precipitate while the aqueous environment causes precipitation of the non-polar pentacyclic triterpenoid(s).

The acidification may be carried out with a dilute strong acid. For example, the acidification may comprise adding of a dilute strong acid to the aqueous solution until a pH within a range from 2 to 5, preferably from 3 to 4 is reached. The dilute acid may for example be a 5 wt-% sulphuric acid solution in water (based on the total weight of the sulphuric acid solution).

Suberin monomers and pentacyclic triterpenoid(s) are recovered in the precipitate formed during acidification of the aqueous solution. Recovering the precipitate may comprise separating the precipitate from the acidified liquid phase by any suitable means, advantageously by filtration. After recovery, the precipitate is optionally dried. Drying the precipitate may facilitate the polymerisation. The drying of the precipitate may be carried out under reduced pressure and/or increased temperature (compared to atmospheric pressure and room temperature, respectively), for example in a rotary evaporator or vacuum oven. Advantageously, the temperature is maintained at or below 90°C during the drying of the precipitate to prevent premature polymerisation.

The precipitate subjected to polymerisation typically contains suberin monomers and pentacyclic triterpenoid(s) in total at least 90 wt-%, preferably at least 95 wt-% of the total dry weight of said precipitate. In addition to the suberin monomers and pentacyclic triterpenoid(s), the precipitate may contain inorganic ion(s) and/or inorganic salt(s), originating from the alkaline hydrolysis and acidification, up to about 4 wt-%, based on the total dry weight of the precipitate. Other constituents of the precipitate may include small organic molecules typically having a carbon number of C6 or below.Accordingly, the present cross-linked elastomeric polyester material may comprise inorganic ion(s) and/or inorganic salt(s) in a total amount within a range from 0.01 wt-% to 4 wt-%, based on the total dry weight of the cross-linked elastomeric polyester material. The amount of inorganic ion(s) and/or inorganic salt(s) is determinable by elemental analysis.

The recovered precipitate, optionally after drying, is subjected to polymerisation to obtain the cross-linked elastomeric polyester material of suberin monomers and pentacyclic triterpenoid(s).

The polymerisation may be melt polymerisation, the melt polymerisation typically carried out without solvent. Alternatively, the polymerisation may be carried out in the presence of a solvent. The polymerisation may occur through polycondensation.

The polymerisation may comprise melting the optionally dried precipitate, preferably at a temperature within a range from 60°C to 90°C, more preferably from 75°C to 85°C. The polymerisation may be heat induced. The polymerisation, especially melt polymerisation, may be carried out at a temperature above 100°C, preferably within a range from 100°C to 200°C, such as 120°C, typically following the melting if implemented. Such temperatures allow water that forms in the polycondensation to evaporate. In the case of polymerisation in the presence of a solvent and/or catalyst, the polymerisation can be carried out at temperatures of about 60°C or above, such as within a range from 60°C to 180°C or 60°C to 100°C. The duration of the polymerisation may for example be within a range from 36 h to 50 h. If a catalyst is used, the polymerisation time, i.e. duration of the polymerization, may be reduced to for example a time within a range from 5 minutes to 120 minutes. Generally, the polymerisation is carried out until a solid cross-linked elastomeric polyester material of suberin monomers and pentacyclic triterpenoids is produced.

The polymerisation may be carried out without a catalyst. Alternatively, the polymerisation may be carried out in the presence of a catalyst. The catalyst may be an acid, advantageously a strong acid, such as sulphuric acid. In embodiments wherein acid is used as polymerisation catalyst, the method typically comprises melting the optionally dried precipitate as detailed above, followed by adding one or more acid, preferably strong acid(s), such as sulfuric acid, to the polymerisation in an amount up to 5 wt-% based on the total dry weight of the precipitate, and carrying out the polymerisation at a temperature within a range from 60°C to 180°C or from 60°C to 100°C, optionally at reduced pressure (compared to atmospheric pressure) or vacuum conditions. The duration of such polymerisation is typically within a range from about 5 minutes to about 120 minutes. The use of a catalyst may decrease the reaction temperature and/or reaction time, which improves efficiency and industrial viability of the present method.

During the polymerisation, carboxyl groups, and hydroxyl groups and/or epoxy groups of at least suberin monomers, possibly also of pentacyclic triterpenoid(s), react to form ester bonds. The suberin monomers typically contain fatty acids that have two carboxyl end groups, and/or fatty acids that have a carboxyl and a hydroxyl end group. Further, suberin monomers may contain fatty acids that have at least one hydroxyl group that is not an end group. At least a portion of these functional groups are capable of forming ester bonds in the polymerisation. The pentacyclic triterpenoid(s), such as betulin, betulinic acid, and lupeol, typically contain at least a hydroxyl group. Without being bound to any theory, it is believed that such hydroxyl groups of pentacyclic triterpenoid(s) may under the present polymerisation conditions be capable of forming ester bonds with carboxyl groups of a suberin monomers. The pentacyclic triterpenoid(s), whether covalently bonded to suberin monomer based polyester structures and/or otherwise present in the cross-linked polyester material, affect the organization or structure of the cross-linked polyester material. Pentacyclic triterpenoids are rather bulky compounds and their presence in a non-negligible amount affect the present material and its properties.

Under the present polymerisation conditions, however, not all functionalities of the suberin monomers (nor the pentacyclic triterpenoid(s)) will react. After polymerisation, the present cross-linked polyester material still contains carbon chain moieties, as described in the foregoing, that have, per moiety, one or more of carbon-carbon double bond(s), epoxy group(s), and/or hydroxyl group(s). The functionalities remaining in the cross-linked polyester material may participate for example in curing reactions, such as sulphur vulcanisation or peroxide curing, allowing curing of the present cross-linked polyester material.

The present method may be carried out with just water and polar alcohol, advantageously ethanol, as solvents. The ethanol may be bioethanol derived from renewable sources, thus containing up to or about 100 % renewable carbon as determined by carbon isotope analysis, for example ASTM D6866-22.

The present method may comprise recovery and recycling of solvents. It has been found that in the present method, even 97 wt-% or more of the solvents may be recovered and recycled back to the process. Recycling of solvents saves resources thus improving industrial viability, and further enhancing environmental sustainability of the present method.

Advantageously, the method comprises recovering from the extraction a liquid residue comprising water and polar alcohol and extractives, separating water and polar alcohol from the extractives preferably by evaporation, recovering the water and polar alcohol separated from the extractives, and feeding said water and polar alcohol back to the extraction, optionally after having adjusted the water and/or polar alcohol content. Typically, the water and polar alcohol separated from the extractives and fed back to the extraction form at least a portion, preferably a majority, of the mixture of polar alcohol and water. i.e. extraction solvent, after a first or initial run of the present method. The optional adjustment of the content of water and/or polar alcohol fed back to the extraction typically comprises adding water and/or polar alcohol in such amount(s) that the wt-% of water and/or wt-% of the polar alcohol in the extraction solvent is maintained at a substantially constant level. Additionally or in the alternative, the optional adjustment of the water and/or polar alcohol content may comprise distillation. Advantageously, the water and/or polar alcohol content is adjusted to obtain an extraction solvent comprising water in an amount within a range from 5 to 35 wt-%, preferably from 7 wt-% to 35 wt-%, more preferably from 10 wt-% to 35 wt-%, based on the total weight of the mixture, the combined amount of the polar alcohol and water advantageously being 100 wt-%.

The present method advantageously comprises recovering from the drying an evaporated fraction, and feeding the evaporated fraction to the hydrolysis. Typically, the evaporated fraction comprises or consist substantially of polar alcohol and water. Said polar alcohol and water originate from the mixture of polar alcohol, water, and strong base in which the hydrolysis is typically carried out, as detailed in the foregoing. The evaporated fraction is typically recycled back to the hydrolysis as a portion of the mixture of polar alcohol, water, and strong base, i.e. the hydrolysis solvent. The water and/or polar alcohol content of the evaporated fraction is optionally adjusted before feeding it to the hydrolysis. The adjustment may be carried out as detailed in connection with the optional recycling of the extraction solvent. Advantageously, the water and/or polar alcohol content of the evaporated fraction is adjusted to maintain their shares substantially constant in the hydrolysis solvent. Advantageously, the water and/or polar alcohol content is adjusted to obtain a polar alcohol content within a range from 60 wt-% to 95 wt-% and a water content within a range from 5 wt-% to 40 wt-% in the hydrolysis. A strong base is typically added, preferably in an amount within a range from 0.5 wt-% to 8 wt-%, to obtain the mixture of polar alcohol, water, and strong base in which the hydrolysis is typically carried out.

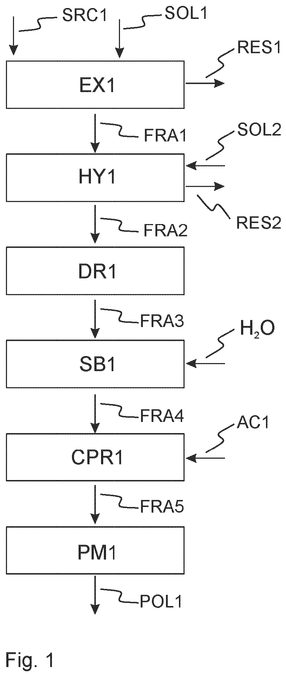

Reference is made to Figure 1, which shows a schematic flow chart of an example method according to the present disclosure. Mechanically disintegrated bark SRC1, advantageously birch bark, and extraction solvent SOL1, a mixture of polar alcohol, advantageously ethanol, and water, are fed to extraction EX1. Preferably, the mixture of polar alcohol and water comprises water in an amount within a range from 5 wt-% to 35 wt-%, further preferably from 7 wt-% to 35 wt-%, more preferably from 10 wt-% to 35 wt-%, based on the total weight of the mixture. The extraction EX1 is preferably carried out at reflux conditions. From the extraction EX1 a solid fraction FRA1 is recovered, and a liquid residue RES1 separated from the solid fraction FRA1 may be discarded or recycled back to the extraction EX1 after having separated extractives therefrom. The solid fraction FRA1 comprises suberin monomers and pentacyclic triterpenoid(s). The liquid residue RES1 typically contains a portion of the pentacyclic triterpenoid(s) present in the mechanically disintegrated bark SRC1 before extraction EX1, and may further contain other extractives. Accordingly, the extraction EX1 is considered a partial extraction (of pentacyclic triterpenoid(s) from the mechanically disintegrated bark SCR1). The recovered solid fraction FRA1 is subjected to alkaline hydrolysis HY1. The alkaline hydrolysis is carried out in a hydrolysis solvent SOL2 containing polar alcohol, advantageously ethanol, water, and strong base, preferably NaOH. In the alkaline hydrolysis, suberin and pentacyclic triterpenoid(s) are separated from the solids of FRA1 and at least the suberin is depolymerised thus obtaining suberin monomers. From the alkaline hydrolysis, a depolymerised fraction FRA2 is recovered, and solid hydrolysis residue RES2 may be discarded. The depolymerised fraction FRA2 is a liquid fraction comprising suberin monomers and pentacyclic triterpenoid(s). The solid hydrolysis residue RES2 contains spent bark including e.g. lignin-carbohydrate complexes. The recovered depolymerised fraction FRA2 is dried DR1 to obtain a solid dried fraction FRA3. The dried fraction FRA3 is solubilized SB1 with water to obtain an aqueous solution FRA4. From the aqueous solution FRA4 suberin monomers and pentacyclic triterpenoids are co-precipitated CPR1 by adding acid AC1 to the aqueous solution. The acid AC1 may be dilute strong acid, such as a 5 wt-% sulphuric acid solution (aq). Advantageously, in the co-precipitation CPR1 the pH is lowered to a pH value within a range from 2 to 5, preferably from 3 to 4. From the co-precipitation CPR1 a precipitate FRA5 comprising suberin monomers and pentacyclic triterpenoid(s) is recovered. The recovered precipitate FRA5 is, optionally after drying (not shown), subjected to polymerisation PM1 to obtain the present cross-linked elastomeric polyester material POL1. The polymerisation PM1 may be melt polymerisation. The polymerisation PM1 may be heat induced. The polymerisation PM1 may be carried out with or without the presence of a catalyst. The above described method steps may be carried out consecutively, in the order described above, substantially without additional steps in between. Especially, the method may be carried out without any extraction with an organic solvent other than polar alcohol.

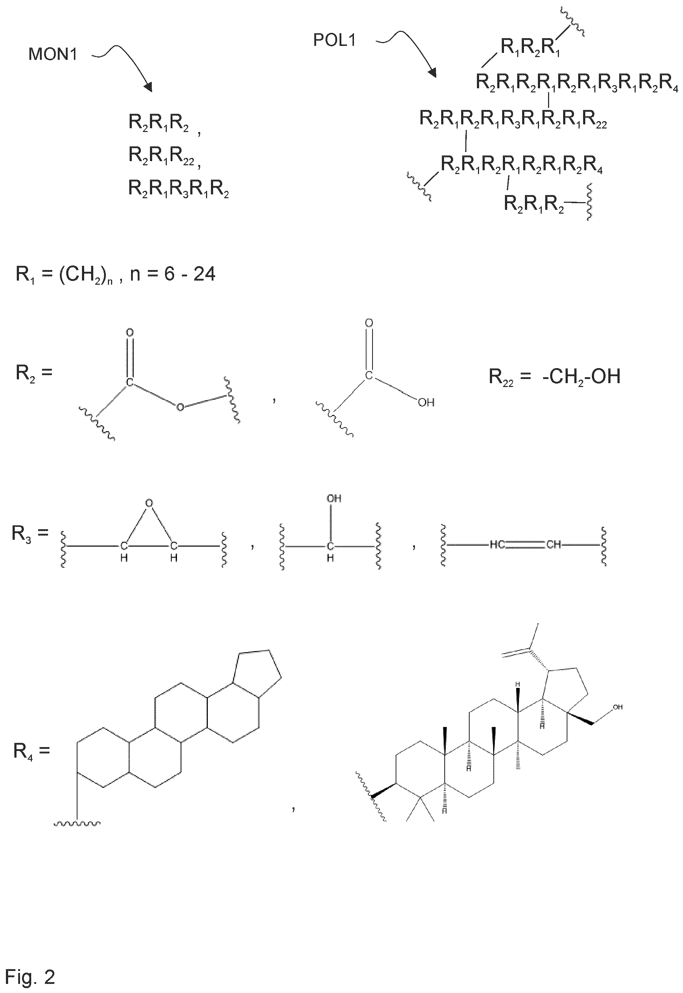

Fig. 2 shows schematic illustrations of some exemplary structural constituents of the present cross-linked elastomeric polyester material POL1. Suberin monomers MON1 are typically aliphatic, substantially linear carboxylic acids. The structure of a suberin monomer MON1 may or may not contain one or more epoxy group(s), hydroxyl group(s), and/or carbon-carbon double bond(s), in addition to the end groups, which in the MON1 examples of Fig. 2 are carboxyl groups or a carboxyl group and a hydroxyl group. Fig. 2 illustrates schematically a part of a cross-linked elastomeric polyester material POL1 structure, containing structural constituents, such as suberin monomers MON1 connected to each other through ester bonds, the esterified suberin monomers MON1 denoted by combinations of R₂, R₁, R₃, and R₂₂, where R₂ denotes an ester bond or a carboxyl group when an end group, R₁ denotes an alkyl chain, R₃ denotes an epoxy group, a carbon containing a hydroxyl group, or carbons connected by a carbon-carbon double bond, and R₂₂ denotes a saturated carbon atom with a hydroxyl end group. It is noted that in the schematic illustration of Fig. 2, when two suberin monomers MON1 react to form an ester bond, an R₂ will denoted said bond and in a sense replace the groups that participated in the reaction. Typically, suberin monomers have carbon numbers within a range from C14 to C24. In the schematic illustration of Fig. 2, the alkyl chain R₁ has a n, corresponding to carbon number, of 6 to 24. When a functionality denoted by R₃ is present, the n is on the lower side of the range. On the other hand, if no functionality denoted by R₃ is present between the end groups of MON1, then n is towards the upper end of the range. It is to be noted that Fig. 2 is provided merely for illustrative purposes. As schematically illustrated by Fig. 2, functionalities of the suberin monomers MON1 denoted by R₃, and R₂ and R₂₂ with respect to end groups, may be maintained in the cross-linked polyester material POL1 after polymerisation. The linkages between suberin monomers MON1 in the cross-linked elastomeric polyester material POL1 are ester bonds R₂ between the alkyl chains R₁. However, as illustrated by POL1 in Fig. 2, not all carbon chains between ester bonds R₂ contain a functionality denoted by R₃, whereby the polyester material POL1 may contain stretches of saturated, unsubstituted alkyl chains. Pentacyclic triterpenoid(s) or betulin, denoted by R₄, may be connected to the cross-linked network of esterified suberin monomers by covalent ester bonds, or interact non-covalently with the cross-linked network of esterified suberin monomers. It is to be noted that the suberin monomers MON1 and the polymer structure POL1 of Fig. 2 are merely schematic examples provided for illustrative purposes to explain functionalities present in the molecular structures. Suberin monomers identical to those depicted by MON1 are not necessarily present, and/or different suberin monomers may be present. Similarly, the cross-linked elastomeric polyester material of suberin monomers and pentacyclic triterpenoid(s) may or may not contain a structure as depicted by POL1.

*Rubber composition and rubber product comprising the cross-linked elastomeric polyester material of suberin monomers and pentacyclic triterpenoid(s)*
As mentioned in the foregoing, the present cross-liked elastomeric polyester material has rubber-like properties and may be used in rubber products, for example to replace conventional rubbers, especially fossil-based rubbers.

It has been found that the present cross-linked polyester material can be compounded with other rubber(s), such as rubber(s) conventionally used in the rubber industry. Further, it has been found that the present cross-liked elastomeric polyester material, and/or rubber compositions comprising the same can be compounded with fillers, curing agents and/or additives commonly used in rubber industry. For example, rubber compositions comprising the present cross-linked polyester material may further contain filler(s), and/or curing agent(s) and/or additive(s), such as, plasticiser(s), colorant(s), and/or processing agent(s).

Accordingly, herein is provided a rubber composition comprising the present cross-linked elastomeric polyester material of suberin monomers and pentacyclic triterpenoid(s), at least one other rubber, optionally one or more filler(s), and optionally one or more curing agent(s) and/or one or more additive(s), such as plasticiser(s), colorant(s), and/or processing agent(s).

The at least one other rubber is advantageously one or more of natural rubber (NR), isoprene rubber (IR), epoxidized natural rubber (ENR), styrene-butadiene rubber (SBR), butadiene rubber (BR), nitrile butadienerubber (NBR), and/or ethylene propylene diene monomer rubber (EPDM). The SBR may be emulsion polymerised styrene butadiene rubber (ESBR), or solution polymerised styrene butadiene rubber (SSBR), or both. Preferably, the rubber composition comprises styrene butadiene rubber, such as SSBR, preferably in an amount of at least 5 phr, further preferably in an amount within a range from 10 phr to 98 phr, yet further preferably from 15 phr to 95 phr, more preferably from 20 phr to 80 phr, even more preferably from 30 phr to 70 phr. BR may be BR of various cis and/or trans content, and/or BR with vinyl content. NR may be NR from *Hevea, Guayule,* and/or *Dandelion.* Isoprene rubber is a synthetic counterpart to natural rubber. The rubber composition advantageously comprises one or more of natural rubber, isoprene rubber, butadiene rubber, epoxidised natural rubber, and/or styrene-butadiene rubber in a total rubber amount yielding up to 100 phr. The cross-linked elastomeric polyester material is typically included in the hundred rubber, and thus the total rubber amount.

It has been found that the rubber composition may comprise the cross-linked elastomeric polyester material in various amounts. The rubber composition may comprise the cross-linked elastomeric polyester material in an amount within a range from 1 phr to 99 phr, or from 5 phr to 70 phr, or from 10 phr to 50 phr, the cross-linked elastomeric polyester material typically included in the hundred rubber. Preferably, the rubber composition comprises at least 2 phr of the cross-linked elastomeric polyester material, further preferably the rubber composition comprises the cross-linked elastomeric polyester material in an amount within a range from 2 phr to 70 phr, more preferably from 5 phr to 50 phr, even more preferably from 5 phr to 30 phr or from 5 phr to 15 phr.

In addition to the cross-linked elastomeric polyester material of suberin monomers and pentacyclic triterpenoid(s), the present rubber composition may comprise epoxidized natural rubber, that may serve as a compatibilizer. Advantageously, the present rubber composition comprises ENR in an amount of at least 5 phr, preferably within a range from 10 to 30 phr, further preferably from 15 to 25 phr. ENR is advantageously comprised in the present rubber composition together with SBR, preferably SSBR, preferably in amounts discussed in the foregoing, to obtain good mechanical properties. Accordingly, the rubber composition advantageously comprises styrene butadiene rubber, preferably in an amount of at least 5 phr, further preferably in the range of 15 to 95 phr, more preferably 20 to 80 phr, even more preferably 30 to 70 phr, and epoxidized natural rubber preferably in an amount of at least 5 phr, more preferably in the range of 10 to 30 phr, even more preferably 15 to 25 phr, the total rubber amount yielding up to 100 phr.

The rubber composition typically comprises one or more filler(s), such as silica and/or carbon black, one or more additives, such as softener(s), antidegradant(s), and/or processing agent(s), and one or more curing agent(s).

Advantageously, the present rubber composition contains one or more filler(s), such as one or more of silica, carbon black, and/or recovered carbon black, in a total amount within a range from 20 phr to 125 phr, such as from 40 phr to 125 phr, preferably from 45 phr to 120 phr, more preferably 50 phr to 100 phr. Such amounts of fillers have been found to contribute to sufficient hardness, strength, and resistance to abrasion once cured. Fillers are generally admixed with the elastomers or rubbers as solid particles.

Fillers usable in the rubber composition include silica, carbon black (CB), recovered carbon black (rCB), fillers from renewable sources, or any combination of these. Advantageously, the rubber composition contains silica, or silica and carbon black and/or recovered carbon black, as filler(s). Silica is beneficial in that it can be obtained from renewable sources, such as rise husk and/or other plant residue, and/or from recycled material, such as recycled industrial waste.

Carbon black usable as filler in the rubber composition is preferably carbon black that has a specific surface area in a range from 25 m²/g to 140 m²/g, further preferably from 25 m²/g to 100 m²/g, more preferably from 60 m²/g to 100 m²/g, based on multipoint nitrogen adsorption, determinable according to ASTM D6556-21 of carbon black type filler material.

Recovered carbon black may be considered a beneficial reinforcement filler material from a sustainability point of view as it is obtained from recycling. While the composition of rCB may vary with respect to the recycled feedstock, in general it is characterized by a relatively low porosity and a BET surface area typically in a range from 50 m²/g to 80 m²/g, determinable according to ASTM D6556-21.

The silica usable as filler in the rubber composition is preferably silica that has a specific surface area in a range from 70 m²/g to 250 m²/g, more preferably from 120 m²/g to 220 m²/g, even more preferably precipitated amorphous silica, such as HDS silica or RHA silica, that has a specific surface area in a range from 140 m²/g to 200 m²/g, based on multipoint nitrogen adsorption, determinable according to ASTM D1993-22. As used herein, HDS refers to highly dispersible silica, and RHA refers to rice husk ash silica.

Compared with carbon black having similar specific surface area, silica as such provides lower degree of reinforcement because it contains a large number of silanol groups (-OH) on the surface, thus making it highly polar and less compatible with conventional rubbers. To improve the reinforcing efficiency of silica to the rubber(s), bifunctional coupling agents are typically used together with silica, such as a silane coupling agent, which bond both to the silica as well as to the polymer chains. The silane coupling agent may be an organosilane. Typically the bifunctional coupling agents comprise a hydrolysable alkoxy group and an organo-functional group, wherein the former is arranged to react chemically with the silanol groups on silica surface while the latter is more compatible with rubbers and can also participate in curing by forming covalent bonds with rubbers.

Curing agents are typically used to facilitate covalent bonding during curing, i.e. vulcanisation, which contains carbon-carbon, carbon-sulphur, and/or sulphur-sulphur linkages, depending on the curing process, between molecules. Peroxide curing typically forms carbon-carbon linkages, whereas sulphur vulcanisation forms carbon-sulphur and sulphur-sulphur linkages. The curing agents may comprise substances commonly used for curing or vulcanisation of rubber components or products, such as sulphur, peroxides, resin, or/and metal oxides. The curing agents may contain vulcanisation retardants, and/or vulcanisation accelerators, such as sulfenamides, for example N-Cyclohexyl-2-benzothiazole sulphenamide abbreviated as CBS and/or N-tert-butyl-benzothiazole sulfonamide abbreviated as TBBS, zinc carbamates, dithiocarbamates, for example zinc bis(dibenzyldithiocarbamate) abbreviated as ZBEC, guanidines, for example diphenyl guanidine abbreviated as DPG, thiurams, for example tetrabenzylthhiuram disulfide abbreviated as TbzTD and/or tetramethyl thiuram disulphide abbreviated as TMTD, and/or thiazoles, for example 2-mercaptobenzothiazole abbreviated as MBT and/or 2-2'-Dithiobis(benzothiazole) abbreviated as MBTS. Further examples include triallyl isocyanurate, abbreviated as TAIC, and/or a commercially available blend of 50 % zinc alkyldithiophorphate, 50 % elastomer binder and dispersing agent called TP-50, a commercially available powder at 45 % of (2,5-dimethyl-2,5-di(tert-butylperoxy)-hexane on calcium carbonate and silica, called Luperox 101-45XL, and/or a commercially available 81.5 % calcium oxide granule coated dispersing agents called Kezadol GR.

The rubber composition may include oil(s), typically acting as processing agent(s), and/or softener(s). The oil(s) may comprise, for example, one or more of TDAE oil (treated distillate aromatic extract), MES oil (mild extracted solvate), RAE oil (residual aromatic extract), paraffinic oil(s), ester based oil(s), such as di (butyl diglycol) adipate commercially available for example as Alcanplast 188, and/or vegetable oil(s), such as sunflower oil, castor oil, or rapeseed oil. Preferably, the oil(s) are selected from one or more of TDAE, RAE, and/or vegetable oil(s). A total amount of the oil(s) in the rubber composition may be from 0 phr to 40 phr.

Advantageously, the rubber composition comprises one or more vegetable oil, such as sunflower oil, rape seed oil, and/or castor oil, preferably in a total amount within a range from 5 phr to 40 phr, further preferably from 8 phr to 30 phr, more preferably from 9 phr to 20 phr. Vegetable oils are renewable, i.e. biogenic, oils and thus their use is contributing to environmental sustainability. Further, it has been found that oxygen containing groups of the cross-linked elastomeric polyester material of suberin monomers and pentacyclic triterpenoid(s) may improve compatibility or miscibility of vegetable oils in a rubber matrix. The amount of vegetable oil(s) present in the rubber composition may affect the softness and to some extent T_{g} once cured. A higher amount of vegetable oil typically increases softness.

The rubber composition may comprise resin(s) and/or liquid polymers acting as softeners, processing agent(s) and/or performance additives. The resin(s) may be aliphatic and/or aromatic. The resin(s) may be selected from one or more of petroleum hydrocarbon resin, aromatic vinyl-based resin, phenol-based resin, terpene resin, terpene phenol resin, rosin derived resins and/or copolymers, and/or mixtures and/or modifications thereof. A total amount of the resins and/or liquid polymer(s) in the rubber composition can be from 0 phr to 45 phr, preferably from 1 phr to 30 phr. Technical effects of resins include fine tuning stiffness properties.

The rubber composition may contain polyol. Advantageously, the rubber composition comprises polyol in an amount of at least 0.5 phr, preferably in an amount within a range from 0.5 phr to 20 phr, more preferably from 1 phr to 15 phr, even more preferably from 2 phr to 10 phr, and the cross-linked elastomeric polyester material of suberin monomers and pentacyclic triterpenoid(s) in an amount of at least 2 phr, preferably in an amount within a range from 2 phr to 30 phr, more preferably from 5 phr to 25 phr, even more preferably from 7 phr to 20 phr. The rubber composition advantageously comprises the cross-linked elastomeric polyester material and the polyol in such amounts that the wt:wt ratio of the cross-linked elastomeric polyester material to the polyol is equal to or larger than 1:1, preferably within a range of 40:1 to 1:1.

The polyol is preferably a polyether, more preferably aliphatic polyether, even more preferably polyethylene glycol. Such polyols may be obtained from renewable sources or raw material. Advantageously, the polyol is renewable, such as a renewable alcohol-ether, especially a renewable polyethylene glycol. The polyol may act as a compatibilization agent, plasticiser, lubricant, and/or processing agent. Preferably, the polyol is a PEG that has a weight average molecular weight, M_{w}, in a range from 200 g/mol to 8000 g/mol, more preferably from 600 g/mol to 4000 g/mol. The weight average molecular weight may be determined by size exclusion chromatography. PEG grades having a M_{w} 600 g/mol to 4000 g/mol are beneficial in industrial scale processes, for example they have a relatively high flash point reducing the need for safety measures. They are generally provided as solid flakes, easy to process, and have good compatibility with and stability in rubber(s).

Other additives usable in the present rubber composition include stearic acid, zinc oxide, abbreviated as ZnO, and/or antidegradants, such as wax, N-(1,3-Dimethylbutyl)-N'- phenyl-p-phenylenediamine, abbreviated as 6PPD, and/or 2,2,4-Trimethyl-1,2- dihydroquinoline, abbreviated as TMQ. The present rubber composition may comprise dioctyl sebacate, commercially available for example as DOS alcanplast, as a plasticiser.

The amounts of additives and curing agents used in the rubber composition may correspond to amounts conventionally used in the rubber industry and typically vary from less than one part per hundred rubber to a few parts per hundred rubber. Oils, resins, and/or liquid polymers may be present in somewhat higher amounts.

The rubber composition may comprise one or more filler(s), one or more additive(s), and one or more curing agent(s) in amounts as explained below:
- filler(s), preferably selected from silica, CB, and/or rCB, within a range from 20 phr to 125 phr, such as 40 phr to 125 phr,
- vegetable oil(s) within a range from 0 phr to 40 phr, preferably from 5 phr to 40 phr,
- antidegradant(s) within a range from 0 phr to 10 phr,
- ZnO within a range from 2 phr to 5 phr, such as 2 phr to 4 phr,
- stearic acid within a range from 1 phr to 3 phr, and
- curing agents, which comprise vulcanisation accelerators, within a range from 1 phr to 5 phr, and sulphur within a range from 1 phr to 5 phr.

The present cross-linked polyester material may be compounded into a rubber composition using conventional means of the rubber industry. The present rubber composition may be compounded using mechanical stepwise mixing, optionally including heating. The mixing may for example be carried out using a two-roll mill at room temperature. Optionally, the present cross-linked polyester material and/or the at least one other rubber can be milled, separately or together, before the mixing. The obtained rubber composition may be shaped and/or assembled into rubber products, including rubber components, that are typically cured once shaped and/or assembled.

As discussed in the foregoing, the functionalities present in the cross-linked elastomeric polyester material of suberin monomers and pentacyclic triterpenoid(s) allow curing (vulcanisation) of the present cross-linked polyester material, as the sole rubber or together with one or more other rubber(s), typically as part of a rubber composition as set out above. The curing may be sulphur vulcanisation, peroxide curing, metal ion curing, or curing with resin, preferably sulphur vulcanisation or peroxide curing. The curing (vulcanisation) may be carried out using curing or vulcanisation agent(s) commonly used in the rubber industry, for example as detailed above.

Curing of the present cross-linked polyester material generally increases its tensile strength and elongation at break significantly. For example, the tensile strength may increase 500 % or more, and/or the elongation at break may increase at a level within a range from 40 % to 130 % following curing the present cross-linked polyester material.

Rubber products, including rubber components, are often cured (vulcanised) before their intended end use, to adjust the physical and/or chemical properties of the products. Accordingly, herein is provided a rubber product comprising a cured cross-linked elastomeric polyester material of suberin monomers and pentacyclic triterpenoid(s) as described herein, or a cured rubber composition as described herein.

Experimental studies show that inclusion of the present cross-linked elastomeric polyester material into a rubber product may increase one or more, even all, of hardness, tensile strength, tear resistance, and/or elongation, compared to a corresponding rubber product without the present cross-linked polyester material. Accordingly, in addition to being beneficial from a view point of environmental sustainability, the present cross-linked polyester material may improve or contribute for example to mechanical properties of a rubber product.

Further, herein is provided use of the present cross-linked polyester material in technical rubber component(s) and/or technical rubber product(s) or article(s). The present cross-linked polyester material may find use in various fields of applications, for example in footwear, clothing, accessories, flooring, gaskets, hoses, insulation, and/or automotive component(s).

*Pyrolysis gas chromatography mass spectrometry method for determining presence of pentacyclic triterpenoid(s) contained in the cross-linked elastomeric polyester material of suberin monomers and pentacyclic triterpenoid(s)*
The presence of pentacyclic triterpenoid(s) contained in the cross-linked elastomeric polyester material of suberin monomers and pentacyclic triterpenoid(s) is determinable by means of Pyrolysis-Gas Chromatography/Mass Spectrometry analysis from the cross-linked elastomeric polyester material as such (before or after curing), and/or a rubber composition (before or after curing), and/or a rubber product (cured) containing the same, when pyrolysed at 340°C.

The Py-GC/MS analysis, including sample preparation, is advantageously carried out as described below.

*Sample preparation:* A rubber sample is obtained (before or after curing). It is understood that the rubber sample may be for example a sample of cross-linked elastomeric polyester material of suberin monomers and pentacyclic triterpenoid(s), or a rubber composition, or a rubber product comprising the same. The rubber sample is broken down into smaller pieces, for example by cutting and/or milling. The sample, once in smaller pieces, is then subjected to acetone extraction in a suitable device, for example in a Soxtec 8000 device by Foss. The acetone extraction is carried out as described in ASTM D297-21, except that the acetone is boiling and the acetone extraction is carried out for 1 hour. The acetone extraction is followed by rinsing the sample for 2 hours with acetone. Then, the rubber sample is dried and stored for analysis.

*Py-GC*/*MS of rubber sample:* The rubber sample (solid) from acetone extraction is placed into a sample holder as is. The sample size is 1 mg and a pyrolysis temperature of 340°C is selected. The Py-GC/MS method is based on ISO 10638:2017 with certain exceptions, such as a GC ramp as follows: start, hold at 40°C 1 min, raise to 100°C by 5°C per minute, raise to 300°C by 20°C per minute, hold in 300°C for 10 minutes. The Py-GC/MS is carried out using a suitable analysis instrument, such as Shimadzu GC-MS QP2010 Ultra with Auto Injector AOC-20i, Multi-shot Pyrolyzer EGA/PY-3030D (Manufacturer: FrontierLab), and Column SH-Rxi-1ms 30 m, thickness 0.25 µm, diameter 0.25 mm. The carrier gas used is advantageously He and split ratio 200. In the MS, solvent cut time of 0.5 min can be used, the MS scan range being from m/z 35 to m/z 500.

Typically, when the sample contains cross-linked elastomeric polyester material of suberin monomers and pentacyclic triterpenoid(s), one or more peaks can be detected between retention times 25.0 min and 32.0 min in the gas chromatogram. Especially, a peak or peaks can be detected at one or more of retention times within the ranges from 25.4 min to 25.8 min, from 26.4 min to 26.9 min, and/or from 28.5 min to 28.9 min when the sample contains cross-linked elastomeric polyester material of suberin monomers and pentacyclic triterpenoid(s). Advantageously, at least a peak at a retention time within the range from 25.4 min to 25.8 min and at a retention time within the range from 26.4 min to 26.9 min are detected when the sample contains cross-linked elastomeric polyester material of suberin monomers and pentacyclic triterpenoid(s). The peak(s) can be identified by MS to contain one or more, advantageously at least two, of the following mass peaks: m/z 189, 203, 207, 363, and/or 406. When the sample does not contain cross-linked elastomeric polyester material of suberin monomers and pentacyclic triterpenoid(s), peaks between retention times 25.0 and 32.0 min are generally absent in the gas chromatogram.

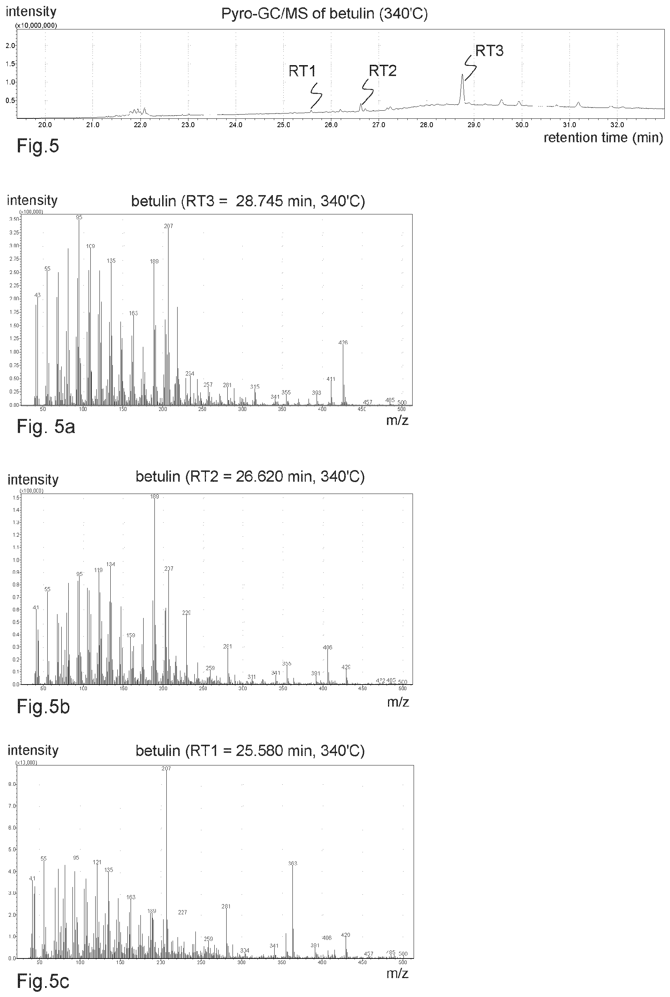

Figs. 5 to 5c show results of a Py-GC/MS analysis of a reference sample of betulin. Betulin is a pentacyclic triterpenoid generally present in birch bark, thus serving as an exemplary pentacyclic triterpenoid for the Py-GC/MS analysis. The Py-GC/MS analysis was carried out as described above, except that the betulin sample was not subjected to the sample preparation. Fig. 5 shows the Py-GC/MS gas chromatogram of betulin. As seen in Fig. 5, three peaks at retention times RT1, RT2, and RT3, respectively, are identifiable between retention times 25.0 min and 32.0 min. Fig. 5a shows the mass spectrum at RT3 (28.745 min) of the chromatogram of Fig. 5. In said mass spectrum, clear m/z 189 and 207 peaks are present. Fig. 5b shows the mass spectrum at RT2 (26.620 min) of the chromatogram of Fig. 5, showing presence of m/z 189, 207, and 406 peaks. Fig. 5c shows the mass spectrum at RT1 (25.580 min) of the chromatogram of Fig. 5. In the mass spectrum at RT1, m/z 207, 363, and 406 peaks are present. Figs. 5 to 5c thus give a reference Py-GC/MS of a pentacyclic triterpenoid.

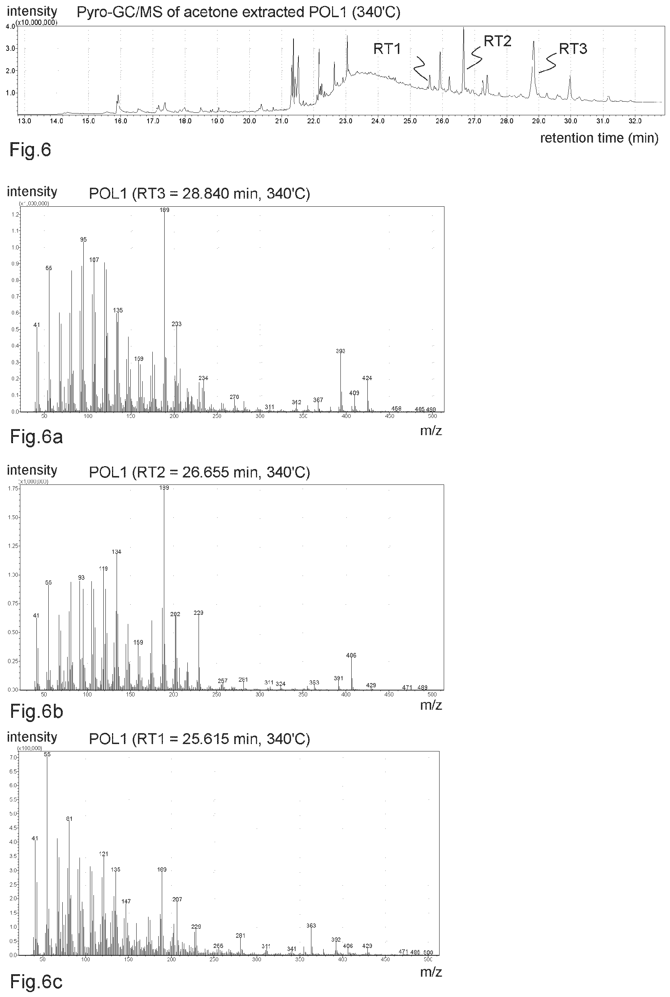

Detection of pentacyclic triterpenoid(s) contained in the cross-linked elastomeric polyester material of suberin monomers and pentacyclic triterpenoid(s) is shown with reference to Figs. 6 to 6c. Figs. 6 to 6c show results of a Py-GC/MS analysis, carried out as described above including sample preparation, of a sample POL1 of cured cross-linked elastomeric polyester material of suberin monomers and pentacyclic triterpenoid(s). Fig. 6 shows the Py-GC/MS gas chromatogram of the acetone extracted sample POL1. As seen in Fig. 6, three peaks at RT1, RT2, and RT3 are identifiable between retention times 25.0 min and 32.0 min. These peaks RT1, RT2, and RT3 have retention times substantially corresponding to RT1, RT2, and RT3, respectively, of the betulin chromatogram of Fig. 5. The skilled person appreciates that some variations in corresponding retention times may occur between samples and/or Py-GC/MS runs. Fig. 6a shows the mass spectrum at RT3 (28.840 min) of the chromatogram of Fig. 6, showing presence of m/z peaks 189 and 203. Fig. 6b shows the mass spectrum at RT2 (26.655 min) of the chromatogram of Fig. 6, and presence of clear m/z 189 and 406 peaks and a small m/z 363 peak. Fig. 6c shows the mass spectrum at RT1 (25.615 min) of the chromatogram of Fig. 6, showing presence of m/z peaks 189, 207, 363, and 406. The presence of peaks at corresponding retention times RT1, RT2, and RT3 in the chromatogram as well as presence of two or more of mass peaks m/z 189, 203, 207, 363, and/or 406 in the mass spectra at RT1, RT2, and RT3, shows presence of betulin and/or other pentacyclic triterpenoid(s) in the cross-linked elastomeric polyester material of suberin monomers and pentacyclic triterpenoid(s).

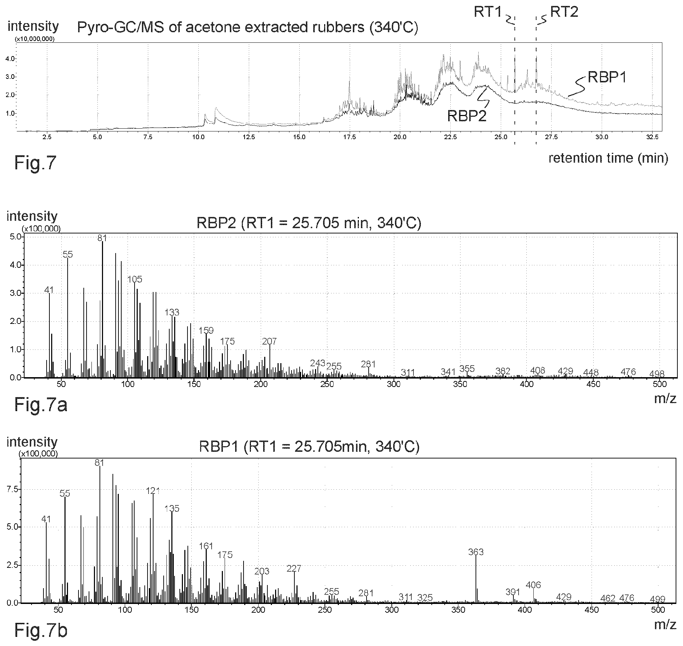

A comparison was made between Py-GC/MS results obtained from a sample of a cured rubber product comprising cross-linked elastomeric polyester material of suberin monomers and pentacyclic triterpenoid(s) RBP1, and from a reference sample of a cured rubber product without content of cross-linked elastomeric polyester material of suberin monomers and pentacyclic triterpenoid(s) RBP2. The RBP1 used in this Py-GC/MS comparison contained the cross-linked elastomeric polyester material of suberin monomers and pentacyclic triterpenoid(s) in an amount of 10 phr. Otherwise, RBP1 and RBP2 used in this Py-GC/MS comparison had corresponding compositions. The Py-GC/MS analysis was carried out as described above, including the sample preparation. Fig. 7 shows Py-GC/MS gas chromatograms of RBP1 and RBP2, respectively. As seen in Fig. 7, the chromatogram of RBP2 lacking content of cross-linked elastomeric polyester material of suberin monomers and pentacyclic triterpenoid(s) did not present any peaks between retention times 25.0 and 32.0 min, whereas the chromatogram of RBP1 containing cross-linked elastomeric polyester material of suberin monomers and pentacyclic triterpenoid(s) had clear peaks at RT1 and RT2, substantially corresponding to RT1 and RT2, respectively, of the chromatograms of Figs. 5 and 6. Already based on the gas chromatograms, RBP1 comprising cross-linked elastomeric polyester material of suberin monomers and pentacyclic triterpenoid(s) can be clearly identified and distinguished from RBP2 by its pentacyclic triterpenoid peaks at retention times RT1 and RT2. Fig. 7a shows the mass spectrum of RBP2 at RT1 (25.705 min). Said spectra contains a m/z 207 peak, but lacks any other of mass peaks m/z 189, 203, 363, and 406. Fig. 7b shows the mass spectrum of RBP1 at RT1 (25.705 min), in which mass peaks m/z 203, 363, and 406 are present. The peaks at RT1 (25.705 min) and RT2 (26.6 min) in the chromatogram together with the presence of the mass peaks m/z 203, 363, and 406 shows presence of cross-linked elastomeric polyester material of suberin monomers and pentacyclic triterpenoid(s) in RBP1. The above described Py-GC/MS analysis, including sample preparation, can thus be used to identify and distinguish rubber products comprising cross-linked elastomeric polyester material of suberin monomers and pentacyclic triterpenoid(s) from rubber products without it.

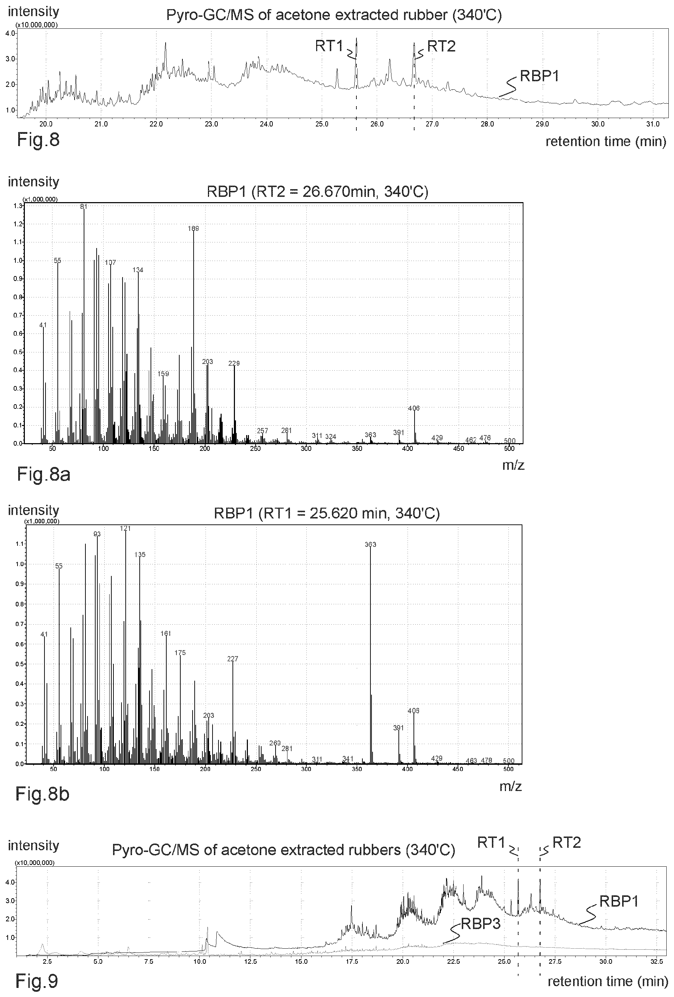

Figs. 8 to 8b show results of a Py-GC/MS analysis of a sample of a cured rubber product comprising 10 phr cross-linked elastomeric polyester material of suberin monomers and pentacyclic triterpenoid(s) RBP1. The Py-GC/MS analysis was carried out as described above, including sample preparation. Fig. 8 shows the Py-GC/MS gas chromatogram of RBP1 with clear peaks at RT1 (25.620 min) and RT2 (26.670 min), corresponding to RT1 and RT2 of the chromatograms of Figs. 5, 6 and 7. Fig. 8a shows the mass spectrum at RT1 (25.620 min), showing presence of mass peaks m/z 189, 203, and 406, and a small m/z 363 peak. Fig. 8b shows the mass spectrum at RT2 (26.670 min) with presence of mass peaks m/z 203, 363, and 406. Figs. 8 to 8c further support the above findings that presence of the cross-linked elastomeric polyester material can be identified by its pentacyclic triterpenoid peaks at RT1 and RT2 in the gas chromatogram together with the presence of mass peaks m/z 189, 203, 207, 363, and/or 406 at RT1 and RT2, respectively.

The above described Py-GC/MS analysis, including sample preparation, is able to distinguish between rubber products containing cross-linked elastomeric polyester material of suberin monomers and pentacyclic triterpenoid(s) from rubber products shaped from a composition into which a pentacyclic triterpenoid has been mixed as such. Fig. 9 shows Py-GC/MS gas chromatograms of a sample of a cured rubber product comprising 10 phr cross-linked elastomeric polyester material of suberin monomers and pentacyclic triterpenoid(s) RBP1, and of a reference sample of a cured rubber product comprising betulin RBP3, respectively. In the reference sample RBP3, betulin was mixed into the composition prior to shaping and curing the rubber product and RBP3 did not contain of the cross-linked elastomeric polyester material of suberin monomers and pentacyclic triterpenoid(s). The Py-GC/MS analysis was carried out as described above, including sample preparation. Fig. 9 shows that the chromatogram of RBP1 comprising cross-linked elastomeric polyester material of suberin monomers and pentacyclic triterpenoid(s) had clear peaks at RT1 (25.7 min) and RT2 (26.6), corresponding to RT1 and RT2 of the chromatograms of Figs. 5, 6, 7, and 8. However, the chromatogram of RBP3 did not have any peaks between retention times 25.0 min and 32.0 min, despite the content of betulin in the initial RBP3 sample. This suggests that the acetone extraction of the sample preparation removes mixed-in pentacyclic triterpenoid(s) from the solid rubber sample, whereas pentacyclic triterpenoid(s) of the cross-linked elastomeric polyester material remain at least to some extent in the solid sample after the acetone extraction, and are thus detectable by the Py-GC/MS. Fig. 9 demonstrates that when sample preparation includes acetone extraction as described above, it is possible to distinguish between rubber products that comprise cross-linked elastomeric polyester material of suberin monomers and pentacyclic triterpenoid(s) from rubber products comprising pentacyclic triterpenoid(s) as such. The finding that pentacyclic triterpenoid(s) contained in the cross-linked elastomeric polyester material of suberin monomers and pentacyclic triterpenoid(s) withstand the acetone extraction during sample preparation suggests that the pentacyclic triterpenoid(s) strongly interact with the esterified suberin monomers and form covalent bonds with suberin monomers during the polymerisation.

Taken together, Figs. 5 to 9 show that the presence of pentacyclic triterpenoid(s) contained in the cross-linked elastomeric polyester material of suberin monomers and pentacyclic triterpenoid(s) is determinable by means of Py-GC/MS analysis from the cross-linked elastomeric polyester material as such (before or after curing), and/or a rubber composition (before or after curing), and/or a rubber product containing the same, when pyrolysed at 340°C. The herein described Py-GC/MS method, including sample preparation comprising acetone extraction, further allows to distinguish between presence of pentacyclic triterpenoid(s) contained in the cross-linked elastomeric polyester material of suberin monomers and pentacyclic triterpenoid(s) from presence of pentacyclic triterpenoid(s) as such in a rubber composition and/or a rubber product. The above described Py-GC/MS method, including sample preparation, can thus be used for identifying rubber compositions and/or rubber products that comprise cross-linked elastomeric polyester material of suberin monomers and pentacyclic triterpenoid(s).

### Examples

Experimental studies reported hereafter explain benefits of the description above in more detail.

### Example 1 - Method for producing cross-linked elastomeric polyester material

A batch of cross-linked elastomeric polyester material according to the present disclosure was produced from industrial birch bark. The birch bark was milled to obtain birch bark powder. 1 kg of the birch bark powder was extracted in a glass reactor with a pre-heated water-ethanol mixture containing 14.4 wt-% water and 85.6 wt-% ethanol at reflux conditions for 30 min using vigorous stirring.

Then, the extract (liquid phase) was separated from the spent bark (solid phase) by vacuum filtration. Residual extract was removed from the spent bark filter cake (solid phase) through washing it with pre-heated ethanol (96 vol-%).

The resulting 0.85 kg of spent bark (solid phase, dry weight) was recovered and then subjected to alkaline hydrolysis in 3.4 kg pre-heated solution (85 wt-% ethanol, 12.1 wt-% water, 2.95 wt-% NaOH) at 65°C for 60 min under vigorous stirring. Then, the hydrolysate (liquid, depolymerised phase) was separated from the spent bark (solid hydrolysis residue) by vacuum filtration.

Residual hydrolysate (liquid, depolymerised phase) was removed from the spent bark filter cake through washing it with pre-heated ethanol (96 vol-%), and the total of the obtained hydrolysate (liquid, depolymerised phase) was recovered. The recovered hydrolysate was then evaporated at 60°C under vacuum of up to 72 mbar(a) until a solid (dried fraction) was formed.

Next, the dried solid (dried fraction) was solubilized in distilled water under vigorous stirring. Then, a solution of 5 wt-% sulphuric acid in water was added step-wise under vigorous stirring until the formed suspension reached a pH of 3-4. Co-precipitated suberin monomers and pentacyclic triterpenoid(s) (precipitate) were isolated from the suspension via filtration and drying.

This dried precipitate of suberin monomers and pentacyclic triterpenoid(s) was then polymerised into a cross-linked elastomeric polyester material according to the present disclosure at 120°C for 46 hours as melt polymerisation without catalyst.

### Example 2 - Curing of cross-linked elastomeric polyester material

Cross-linked elastomeric polyester material according to the present disclosure was obtained as described in Example 1. Two compositions of the cross-linked elastomeric polyester material were formed, one for sulphur vulcanisation and the other for peroxide curing. The composition for sulphur vulcanisation is shown in Table 1, and the composition for peroxide curing is shown in Table 2. In tables 1 and 2, POL1 denotes the cross-linked elastomeric polyester material. The compositions were formed by milling of the cross-linked elastomeric polyester material for 5 minutes to 10 minutes followed by stepwise mixing in of first silica as a filler and then additives and curing agents into the composition, as detailed in Tables 1 and 2, respectively.

**Table 1. Composition for sulphur vulcanisation.**

| | phr |
|---|---|
| POL1 | 100 |
| Silica | 20 |
| Stearic acid | 1 |
| ZnO | 5 |
| Sulphur | 1.2 |
| CBS | 2.5 |
| TP-50 | 3 |
| MBT | 1.5 |
| TMTD | 2 |
| **Total** | **136.2** |

In Table 1, CBS refers to N-cyclohexyl-2-benzothiazolesulfenamide, TP-50 refers to a commercially available blend of 50 % zinc alkyldithiophorphate, 50 % elastomer binder and dispersing agent, MBT refers to 2-Mercaptobenzothiazole, and TMTD refers to tetramethyl thiuram disulphide.

**Table 2. Composition for peroxide curing.**

| | phr |
|---|---|
| POL1 | 100 |
| Silica | 35 |
| Plasticiser DOS alcanplast | 10 |
| TAIC | 3 |
| Luperox 101-45XL | 5 |
| Kezadol GR | 1.5 |
| **Total** | **154.5** |

In Table 2, plasticiser DOS alcanplast refers to a commercially available monomeric plasticiser of dioctyl sebacate, TAIC refers to triallyl isocyanurate, Luperox 101-45XL to a commercially available powder at 45 % of (2,5-dimethyl-2,5-di(tert-butylperoxy)-hexane on calcium carbonate and silica, and Kezadol GR refers to a commercially available 81.5 % calcium oxide granule coated dispersing agents.

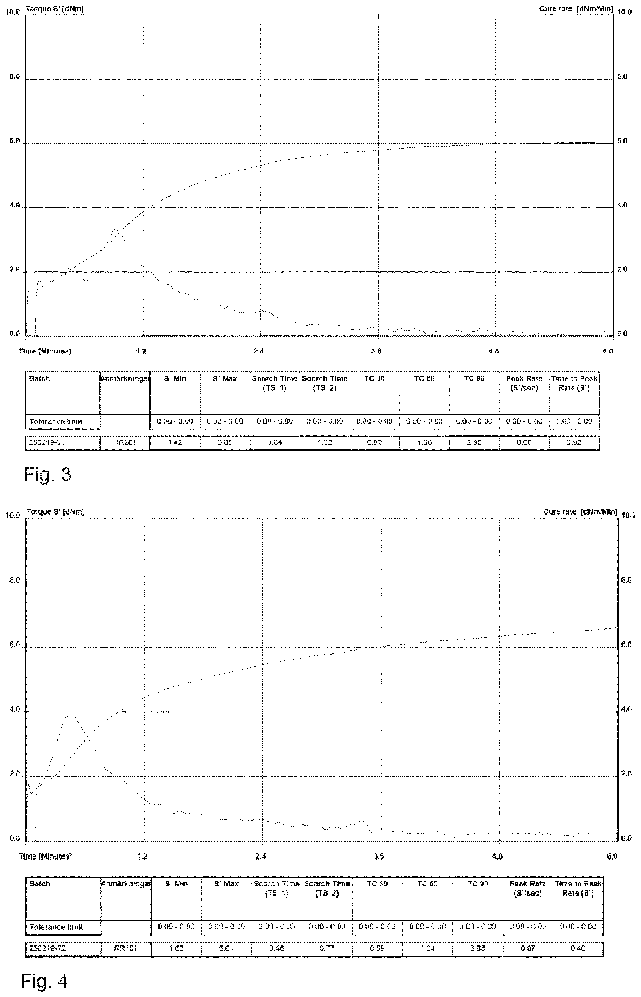

Rubber vulcanisation characteristics were analysed using a Moving Die Rheometer (MDR) at 150°C to obtain the curing rheology curves shown in Fig. 3 for the sulphur vulcanisation and in Fig. 4 for the peroxide curing. In the curing rheology curves, torque was plotted as a function of time as the compositions progressively cured. A substantially steady state was achieved both with sulphur and with peroxide curing. The curing rheology curves provided insights into the scorch time, optimum cure time (t90), and torque development. Figs. 3 and 4 show that the present cross-linked elastomeric polyester material is curable by sulphur vulcanisation and by peroxide curing, respectively, and a reasonable optimum cure time (t90) can be determined in both cases.

### Example 3 - Mechanical properties of cured cross-linked elastomeric polyester material

Cross-linked elastomeric polyester material according to the present disclosure was obtained as described in Example 1. A composition of the cross-linked elastomeric polyester material was formed for sulphur vulcanisation. The composition for sulphur vulcanisation is shown in Table 3. In table 3, POL1 denotes the cross-linked elastomeric polyester material. The composition was formed by milling of the cross-linked elastomeric polyester material for 5 minutes to 10 minutes followed by stepwise mixing in of first stearic acid and then curing agents into the composition, as detailed in Table 3.

**Table 3. Composition for sulphur vulcanisation of the cross-linked elastomeric polyester material.**

| | phr |
|---|---|
| POL1 | 100 |
| Stearic acid | 1.5 |
| ZnO | 3 |
| Sulphur | 2 |
| TP-50 | 1.5 |
| MBTS | 1.5 |
| TMTD | 0.5 |
| **Total** | **110** |

In Table 3, TP-50 refers to a commercially available blend of 50 % zinc alkyldithiophorphate, 50 % elastomer binder and dispersing agent, MBT refers to 2-Mercaptobenzothiazole, and TMTD refers to tetramethyl thiuram disulphide.

The compounded material was sheeted out to a substantially uniform thickness of approximately 2 mm and left to mature at room temperature for 24 hours to allow for stress relaxation and improved dispersion of the curing agents.

Vulcanisation was performed using a hydraulic press at 180°C for 10 minutes under a pressure of 10 MPa, ensuring substantially consistent curing across the samples. Before characterization, the vulcanised sheets were conditioned at room temperature for 24 hours.

Tensile testing of vulcanised cross-linked elastomeric polyester material and of un-vulcanised cross-linked elastomeric polyester material was conducted according to ASTM D412-16(2021) to evaluate mechanical properties, including tensile strength, and elongation at break. The results are reported in Table 4 below. In Table 4, POL1 denotes the cross-linked elastomeric polyester material.

**Table 4. Tensile testing of rubber compositions containing cross-linked elastomeric polyester material according to the present disclosure.**

| | **POL1** | **POL1, vulcanised** |
|---|---|---|
| Tensile strength (MPa) | 1.1 | 6.3 |
| Elongation (%) | 40 | 130 |

Table 4 shows that vulcanisation of the cross-linked elastomeric polyester material according to the present disclosure increased tensile strength and elongation, compared to the corresponding un-vulcanised cross-linked elastomeric polyester material. Thus, vulcanisation of the cross-linked elastomeric polyester material improves mechanical properties compared to the corresponding un-vulcanised cross-linked elastomeric polyester material.

### Example 4 - Cured rubber compositions

Cross-linked elastomeric polyester material according to the present disclosure and obtained as described in Example 1 was compounded with different conventional rubbers, namely each of Natural Rubber (NR), Styrene-Butadiene Rubber (SBR), Butadiene Rubber (BR), Nitrile Butadiene Rubber (NBR), or Ethylene Propylene Diene Monomer (EPDM) rubber, respectively.

Rubber compositions containing 20 phr of the cross-linked elastomeric polyester material and 80 phr of an above-mentioned conventional rubber were formed, the cross-linked elastomeric polyester material included in the hundred rubber. Mixing of the cross-linked elastomeric polyester material with a conventional rubber was conducted using a two-roll mill at room temperature to ensure substantially homogeneous dispersion of the cross-linked elastomeric polyester material within the respective conventional rubber. Initially, the respective conventional rubber was mixed for 3 minutes and then the cross-linked elastomeric polyester material was gradually added, followed by the addition of 3 phr ZnO, 1.5 phr stearic acid, 2 phr sulphur, 0.5 phr MBTS (Benzothiazyl Disulfide), 1.5 phr TP-50 (blend of 50 % zinc alkyldithiophorphate, 50 % elastomer binder, dispersing agent), and 0.5 phr TMTD (tetramethyl thiuram disulphide). The compounding was continued for an additional 7 minutes to achieve a substantially homogeneous blend.

The compounded materials were sheeted out respectively to a substantially uniform thickness of approximately 2 mm and left to mature at room temperature for 24 hours to allow for stress relaxation and improved dispersion of the curing agents.

Vulcanisation was performed using a hydraulic press at 150°C for 10 minutes under a pressure of 10 MPa, ensuring substantially consistent curing across the samples. Before characterization, the vulcanised sheets were conditioned at room temperature for 24 hours.

Reference samples of each conventional rubber (100 phr), respectively, were prepared as described above, using otherwise the same recipe except that no cross-linked elastomeric polyester material according to the present disclosure was mixed with the conventional rubber. All reference samples were vulcanised using sulphur.

Tensile testing was conducted according to ASTM D412-16(2021) to evaluate mechanical properties, including tensile strength, and elongation at break. The results are reported in Table 5 below. In Table 5, POL1 denotes the cross-linked elastomeric polyester material. Hardness was determined according to ASTM D2240-05. Tear resistance was determined according to ASTM D624.

**Tabel 5. Tensile testing of rubber compositions containing cross-linked elastomeric polyester material according to the present disclosure. Ref denotes reference example.**

| **NR/POL1** | **100 phr NR, ref** | **NR/POL1** 80/20 **(phr)** |
|---|---|---|
| Hardness | 33.6 | 39.6 |
| Tensile strength (MPa) | 8.14 | 11.9 |
| Elongation (%) | 670 | 733 |
| Tear resistance(kN/m) | 21.5 | 22 |

| **SBR/POLA1** | **100 phr SBR, ref** | **SBR/POL1 80/20 (phr)** |
|---|---|---|
| Hardness | 40.9 | 56.8 |
| Tensile strength (MPa) | 1.98 | 4.03 |
| Elongation (%) | 455 | 618 |
| Tear resistance (kN/m) | 7.94 | 13.6 |

| **BR/Pol1** | **100 phr BR, ref** | **BR/POL1 80/20 (phr)** |
|---|---|---|
| Hardness | 47.3 | 55.1 |
| Tensile strength (MPa) | 1.55 | 2.68 |
| Elongation (%) | 200 | 278 |
| Tear resistance (kN/m) | 6.95 | 8.76 |

| **NBR/POLA1** | **100 phr NBR, ref** | **NBR/POL1 80/20 (phr)** |
|---|---|---|
| Hardness | 48.4 | 59.8 |
| Tensile strength (MPa) | 4.12 | 6.57 |
| Elongation (%) | 522 | 496 |
| Tear resistance (kN/m) | 12.9 | 17.8 |

| **EPDM/POL1** | **100 phr EPDM. ref** | **EPDM/POL1 80/20 (phr)** |
|---|---|---|
| Hardness | 52.6 | 63.5 |
| Tensile strength (MPa) | 2.67 | 4.35 |
| Elongation (%) | 464 | 666 |
| Tear resistance (kN/m) | 12.4 | 17.5 |

Table 5 shows that inclusion of the cross-linked elastomeric polyester material according to the present disclosure increased hardness, tensile strength, and tear resistance compared to the corresponding, vulcanised conventional rubber. Thus, inclusion of the cross-linked elastomeric polyester material improved mechanical properties and/or mechanical durability compared to the corresponding conventional rubber. Also, for every other tested sample except NBR/POL1, the elongation increased when the cross-linked elastomeric polyester material according to the present disclosure was present.

Based on the results reported in Tabel 5, it may be concluded that the cross-linked polyester material according to the present disclosure does not merely improve environmental sustainability and/or increase the share of renewable constituents, but also contributes to and may improve mechanical properties compared to conventional rubber compounds.

For the person skilled in the art, it will be clear that modifications and variations of the present disclosure are perceivable. The figures are meant to be illustrative and to be read together with the description above. Any particular examples described above are illustrative only and not meant to limit the scope of the invention, which is defined by the appended claims.

## Claims

1. A cross-linked elastomeric polyester material of suberin monomers and pentacyclic triterpenoid(s), the cross-linked elastomeric polyester material containing carbon chain moieties between adjacent ester bonds having, per moiety, one or more of carbon-carbon double bond(s), epoxy group(s), and/or hydroxyl group(s).

2. A method for producing a cross-linked elastomeric polyester material according to claim 1, the method comprising:
providing mechanically disintegrated bark, the bark containing suberin and pentacyclic triterpenoid(s),
extracting the bark with a mixture of polar alcohol and water, and recovering a solid fraction comprising suberin and pentacyclic triterpenoid(s),
subjecting the solid fraction to alkaline hydrolysis to obtain a depolymerised fraction comprising suberin monomers and pentacyclic triterpenoid(s), the suberin monomers comprising fatty acids having, per fatty acid, at least two functionalities that are, independently from each other, carbon-carbon double bond(s), epoxy group(s), carboxyl group(s), and/or hydroxyl group(s),
recovering and drying the depolymerised fraction comprising suberin monomers and pentacyclic triterpenoid(s) to obtain a dried fraction,
solubilizing the dried fraction in aqueous solvent to obtain an aqueous solution comprising suberin monomers and pentacyclic triterpenoid(s),
co-precipitating suberin monomers and pentacyclic triterpenoid(s) from the aqueous solution through acidification and recovering a precipitate comprising suberin monomers and pentacyclic triterpenoid(s),
subjecting the precipitate, optionally after drying, to polymerisation to obtain the cross-linked elastomeric polyester material of suberin monomers and pentacyclic triterpenoid(s).

3. The method according to claim 2, the mixture of polar alcohol and water comprises water in an amount within a range from 5 wt-% to 35 wt-%, preferably from 7 wt-% to 35 wt-%, more preferably from 10 wt-% to 35 wt-%, of the total weight of the mixture.

4. The cross-linked elastomeric polyester material according to claim 1 or the method according to claim 2 or 3, wherein the cross-linked elastomeric polyester material comprises pentacyclic triterpenoid(s) from 2 wt-% to 15 wt-%, based on the total dry weight of the cross-linked elastomeric polyester material, and/or wherein the pentacyclic triterpenoid(s) contain betulin.

5. The cross-linked elastomeric polyester material or the method according to any one of the preceding claims, wherein the mol:mol ratio of aliphatic hydroxyl groups to aliphatic carboxyl groups of the suberin monomers and pentacyclic triterpenoid(s) is within a range from 0.8 to 2.5.

6. The cross-linked elastomeric polyester material or the method according to any one of the preceding claims, wherein of the suberin monomers at least 75 wt-% are fatty acids containing at least two functionalities that are, independently from each other, carbon-carbon double bond(s), epoxy group(s), carboxyl group(s), and/or hydroxyl group(s), and/or
wherein the suberin monomers comprise one or more of hydroxy-1,18-dioic-18:1 acid, 9,10,18-trihydroxy-18:0 acid, 22-hydroxy-22:0 acid, 18-hydroxy-(9)18:1 acid, 1,22-dioic-22:0 acid, 1,18-dioic-(9)18:1 acid, 20-hydroxy-20:0 acid, 9,16-dihydroxy-16:0 acid, 10,16-dihydroxy-16:0 acid, 20-hydroxy-20:1 acid, 9,18-dihydroxy-(9)18:1 acid, and/or 1,20-dioic-20:0 acid, preferably in a total amount of at least 50 wt-%, based on the total dry weight of the suberin monomers.

7. The cross-linked elastomeric polyester material or the method according to any one of the preceding claims, wherein the cross-linked elastomeric polyester material comprises suberin monomers and pentacyclic triterpenoid(s) in a total amount of at least 90 wt-%, preferably at least 95 wt-%, based on the total dry weight of the cross-linked elastomeric polyester material.

8. The cross-linked elastomeric polyester material or method according to any one of the preceding claims, wherein the cross-linked elastomeric polyester material has a density within a range from 0.85 kg/dm³ to 1.70 kg/dm³, preferably from 1.10 kg/dm³ to 1.70 kg/dm³, as determined according to ISO 2781:2018.

9. The cross-linked elastomeric polyester material or method according to any one of the preceding claims, wherein the cross-linked elastomeric polyester material has a hardness within a range from 35 ShA to 45 ShA, as determined according to ASTM D2240-15(2021) at 25°C.

10. The cross-linked elastomeric polyester material or method according to any one of the preceding claims, wherein the cross-linked elastomeric polyester material has a glass transition temperature (T_{g}) within a range from -30°C to +30°C, preferably from -20°C to +20°C, more preferably from -15°C to +15°C, as determined according to ASTM D7426-24.

11. A rubber composition comprising a cross-linked elastomeric polyester material according to any one of claims 1 or 4 to 9, at least one other rubber, optionally one or more filler(s), and optionally one or more curing agent(s) and/or one or more additive(s), such as plasticiser(s), colorant(s), and/or processing agent(s).

12. The rubber composition according to claim 11, wherein the at least one other rubber is one or more of natural rubber, isoprene rubber, epoxidised natural rubber, styrene-butadiene rubber, butadiene rubber, nitrile butadiene rubber, and/or ethylene propylene diene monomer rubber.

13. A rubber product comprising a cured cross-linked elastomeric polyester material according to any one of claims 1 or 4 to 10 or a cured rubber composition according to claim 11 or 12.

14. The cross-linked elastomeric polyester material or the method or the rubber composition or the rubber product according to any one of the preceding claims, wherein the presence of pentacyclic triterpenoid(s) contained in the cross-linked elastomeric polyester material is determinable by means of Pyrolysis-Gas Chromatography/Mass Spectrometry analysis from the cross-linked elastomeric polyester material, the rubber composition, or rubber product, when pyrolysed at 340°C.

15. Use of a cross-linked elastomeric polyester material according to any one of claims 1 or 4 to 10 or 14, or a rubber composition according to claim 11 or 12 or 14, or a rubber product according to claim 13 or 14 in rubber component(s) and/or rubber article(s), such as in footwear, clothing, accessories, gasket(s), hose(s), insulation product(s), electronics, sports equipment, flooring, and/or automotive component(s).
